# EUROPEAN PATENT SPECIFICATION

(11) **EP 4 619 949 B1**
(45) Date of publication and mention of the grant of the patent: **04.11.2026**
(21) Application number: 23808733.2
(22) Date of filing: 14.11.2023
(51) Int. Cl.: G06V 10/26, G06V 10/44, G06V 10/764

(54) **SPATIO-TEMPORAL NETWORK FOR VIDEO SEMANTIC SEGMENTATION IN SURGICAL VIDEOS**
RÄUMLICH-ZEITLICHES NETZWERK FÜR DIE SEMANTISCHE SEGMENTIERUNG VON OPERATIONSVIDEOS
RÉSEAU SPATIO-TEMPOREL POUR LA SEGMENTATION SÉMANTIQUE DES VIDÉOS CHIRURGICALES

(30) Priority: 14.11.2022 GR 20220100938; 24.07.2023 GR 20230100606
(43) Date of publication of application: 24.09.2025
(73) Proprietor: DIGITAL SURGERY LIMITED, London EC1V 2TT (GB)
(72) Inventor: GRAMMATIKOPOULOU, Maria, London EC1V 2TT (GB); SANCHEZ-MATILLA, Ricardo, London EC1V 2TT (GB); BRAGMAN, Felix John Samuel, London EC1V 2TT (GB); OWEN, David P., London EC1V 2TT (GB); STOYANOV, Danail V., London EC1V 2TT (GB); LUENGO MUNTION, Imanol, London EC1V 2TT (GB)
(74) Representative: Strange, Harry George
(86) International application number: PCT/EP2023/081789
(87) International publication number: WO 2024/105050

(56) References cited:
- US-B2- 11 361 546
- NOSHABA CHEEMA ET AL: "Dilated Temporal Fully-Convolutional Network for Semantic Segmentation of Motion Capture Data", EUROGRAPHICS/ ACM SIGGRAPH SYMPOSIUM ON COMPUTER ANIMATION - POSTERS. ACM SIGGRAPH / EUROGRAPHICS SYMPOSIUM ON COMPUTER ANIMATION, 24 June 2018 (2018-06-24), XP093123432, ISSN: 1727-5288, Retrieved from the Internet <URL:https://arxiv.org/pdf/1806.09174.pdf> [retrieved on 20240124]
- MOHIB ULLAH ET AL: "PedNet: A Spatio-Temporal Deep Convolutional Neural Network for Pedestrian Segmentation", JOURNAL OF IMAGING, vol. 4, no. 9, 4 September 2018 (2018-09-04), pages 107, XP055687501, DOI: 10.3390/jimaging4090107

## Description

### BACKGROUND

The present disclosure relates in general to computing technology and relates more particularly to a spatio-temporal network for video semantic segmentation in surgical videos. Such spatio-temporal networks are e.g. disclosed in NOSHABA CHEEMA ET AL: "Dilated Temporal Fully-Convolutional Network for Semantic Segmentation of Motion Capture Data", ACM 24-06-2018 and US11361546B2.

Computer-assisted systems, particularly computer-assisted surgery systems (CASs), rely on video data digitally captured during a surgery. Such video data can be stored and/or streamed. In some cases, the video data can be used to augment a person's physical sensing, perception, and reaction capabilities. For example, such systems can effectively provide the information corresponding to an expanded field of vision, both temporal and spatial, that enables a person to adjust current and future actions based on the part of an environment not included in his or her physical field of view. Alternatively, or in addition, the video data can be stored and/or transmitted for several purposes, such as archival, training, post-surgery analysis, and/or patient consultation.

### SUMMARY

According to an aspect, a computer-implemented method according to claim 1 is provided. The computer-implemented method includes: utilizing, for post-operative video processing, training or real-time guidance, a spatio-temporal network for video semantic segmentation in surgical videos, which includes: accepting, by an encoder, a sequence of frames captured during surgery as an input based on a temporal window T; extracting, with the encoder, features for each frame in the sequence; passing, to a decoder, the extracted features; learning, by the decoder, spatio-temporal representations of the features; and outputting, by the decoder, a segmentation map for a central frame of a temporal batch of frames.

According to another aspect, a system according to claim 7 is provided. The system includes: a data store comprising video data associated with a surgical procedure; and a machine learning training system configured to: utilize, for post-operative video processing, training or real-time guidance, a spatio-temporal network for video semantic segmentation in surgical videos, wherein the system is configured to: extract, with an encoder, features of each frame in a sequence of frames captured during surgery based on a temporal window T; learn, by a decoder, spatio-temporal representations of the features; and output, by the decoder, a segmentation map for a central frame of a temporal batch of frames.

According to another aspect, a computer program product according to claim 11 is provided. The computer program product includes a memory device having computer executable instructions stored thereon, which when executed by one or more processors cause the one or more processors to perform a plurality of operations comprising: utilizing, for post-operative video processing, training or real-time guidance, a spatio-temporal network for video semantic segmentation in surgical videos, which includes: learning, by a decoder, spatio-temporal representations of features extracted from each frame in a sequence of frames captured during surgery based on a temporal window T; and outputting, by the decoder, a segmentation map for a central frame of a temporal batch of frames.

The above features and advantages, and other features and advantages, of the invention as defined in the appended claims are readily apparent from the following detailed description when taken in connection with the accompanying drawings.

### BRIEF DESCRIPTION OF THE DRAWINGS

The specifics of the exclusive rights described herein are particularly pointed out and distinctly claimed in the claims at the conclusion of the specification. The foregoing and other features and advantages of the aspects of the disclosure are apparent from the following detailed description taken in conjunction with the accompanying drawings in which:
FIG. 1 depicts a computer-assisted surgery (CAS) system according to one or more aspects;
FIG. 2 depicts a surgical procedure system according to one or more aspects;
FIG. 3 depicts a system for analyzing video and data according to one or more aspects;
FIG. 4 depicts a diagram of the disclosed temporal decoder model, where the model accepts a sequence of frames captured during surgery as an input based on a temporal window T and extracts features for each using a static encoder, which are subsequently passed to a temporal decoder which learns spatio-temporal representations and finally outputs a segmentation map for the central frame of the temporal batch, according to one or more aspects;
FIG. 5A depicts an outline of the architecture of the disclosed temporal decoder (SP-TCN, or spatio-temporal convolutional network), according to one or more aspects;
FIG. 5B depicts a schematic of the increase in receptive field caused by repeated dilated 3D convolutions with 3 successive layers using kₜ = 3 and T = 8, where the exponential increase in the dilation factor facilitates a large temporal receptive field for each frame, and where both inputs and outputs of the dilated TCN block are temporal representations z, according to one or more aspects;
FIG. 6A depicts a flowchart of a method of utilizing, for post-operative video processing, training or real-time guidance, a spatio-temporal network for video semantic segmentation in surgical videos according to one or more aspects; and
FIG. 6B is a flowchart showing additional aspects of a temporal decoder referenced in FIG. 6A, according to an embodiment;
FIG. 6C is a flowchart showing a process of applying N-3D dilated residual layers to a first 3D convolution layer output referenced in FIG. 6B, according to an embodiment;
FIG. 6D is a flowchart showing aspects of a segmentation layer referenced in FIG. 6B, according to an embodiment;
FIG. 6E is a flowchart showing further aspects of the processing by the encoder and decoder that provides the spatio-temporal decoder which predicts the segmentation maps;
FIGS. 6F-6G are flowcharts, each showing more generally the method of utilizing, for post-operative video processing, training or real-time guidance, a spatio-temporal network for video semantic segmentation in surgical videos;
FIG. 7 depicts a temporal consistency (TC) metric that is calculated between a pair of consecutive frames Iₜ₋₁ and Iₜ, according to one or more aspects;
FIG. 8 depicts example predictions for the (Partial Nephrectomy) PN dataset. Figures show example segmentations for kidney (pink), liver (cyan), renal vein (blue) and renal artery (green), according to one or more aspects;
FIG. 9 depicts example predictions for kidney (pink), liver (cyan), renal vein (blue) and renal artery (green) for two sequences of three images from the PN dataset, according to one or more aspects;
FIG. 10 depicts example predictions for the CholecSeg8k dataset for two sequences of three images, according to one or more aspects;
FIG. 11 depicts example predictions for the CholecSeg8k dataset for two sequences of three images, according to one or more aspects;
FIG. 12 depicts a block diagram of a computer system according to one or more aspects.

The diagrams depicted herein are illustrative. Also, the term "coupled" and variations thereof describe having a communications path between two elements and do not imply a direct connection between the elements with no intervening elements/connections between them. All of these variations are considered a part of the specification.

### DETAILED DESCRIPTION

Exemplary aspects of the technical solutions described herein include systems and methods for providing a spatio-temporal network for video semantic segmentation in surgical videos.

Semantic segmentation in surgical videos has applications in intra-operative guidance, post-operative analytics and surgical education. Segmentation models should provide accurate and consistent predictions since temporally inconsistent identification of anatomical structures can impair usability and hinder patient safety. Video information can alleviate these challenges.

Technical solutions are described herein to address such technical challenges. Particularly, technical solutions herein provide a novel architecture for modelling temporal relationships in videos to address these issues. Methods: a temporal segmentation model was developed that includes a static encoder and a spatio-temporal decoder. The encoder processes individual frames whilst the decoder learns spatio-temporal relationships in a temporal batch of frames to improve temporal consistency. The decoder can be used with any suitable encoder to improve temporal consistency in a range of models. Results and conclusions: Model performance was evaluated on the CholecSeg8k dataset and a private dataset of robotic Partial Nephrectomy procedures. Mean Intersection over Union improved by 1.30% and 4.27% respectively for each dataset when the temporal decoder was applied. The disclosed model also displayed improvements in temporal consistency up to 7.23%. This work demonstrates an advance in video segmentation of surgical scenes with potential applications in surgery with a view to improve patient outcomes.

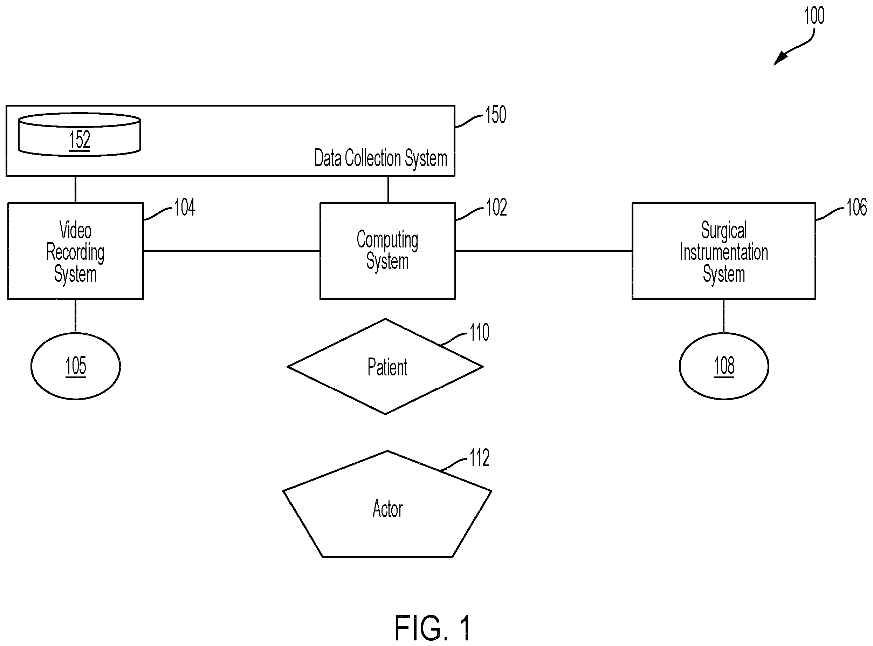

Turning now to FIG. 1, an example computer-assisted system (CAS) system 100 is generally shown in accordance with one or more aspects. The CAS system 100 includes at least a computing system 102, a video recording system 104, and a surgical instrumentation system 106. As illustrated in FIG. 1, an actor 112 can be medical personnel that uses the CAS system 100 to perform a surgical procedure on a patient 110. Medical personnel can be a surgeon, assistant, nurse, administrator, or any other actor that interacts with the CAS system 100 in a surgical environment. The surgical procedure can be any type of surgery, such as but not limited to cataract surgery, laparoscopic cholecystectomy, endoscopic endonasal transsphenoidal approach (eTSA) to resection of pituitary adenomas, or any other surgical procedure. In other examples, actor 112 can be a technician, an administrator, an engineer, or any other such personnel that interacts with the CAS system 100. For example, actor 112 can record data from the CAS system 100, configure/update one or more attributes of the CAS system 100, review past performance of the CAS system 100, repair the CAS system 100, and/or the like including combinations and/or multiples thereof.

A surgical procedure can include multiple phases, and each phase can include one or more surgical actions. A "surgical action" can include an incision, a compression, a stapling, a clipping, a suturing, a cauterization, a sealing, or any other such actions performed to complete a phase in the surgical procedure. A "phase" represents a surgical event that is composed of a series of steps (e.g., closure). A "step" refers to the completion of a named surgical objective (e.g., hemostasis). During each step, certain surgical instruments 108 (e.g., forceps) are used to achieve a specific objective by performing one or more surgical actions. In addition, a particular anatomical structure of the patient may be the target of the surgical action(s).

The video recording system 104 includes one or more cameras 105, such as operating room cameras, endoscopic cameras, and/or the like including combinations and/or multiples thereof. The cameras 105 capture video data of the surgical procedure being performed. The video recording system 104 includes one or more video capture devices that can include cameras 105 placed in the surgical room to capture events surrounding (i.e., outside) the patient being operated upon. The video recording system 104 further includes cameras 105 that are passed inside (e.g., endoscopic cameras) the patient 110 to capture endoscopic data. The endoscopic data provides video and images of the surgical procedure.

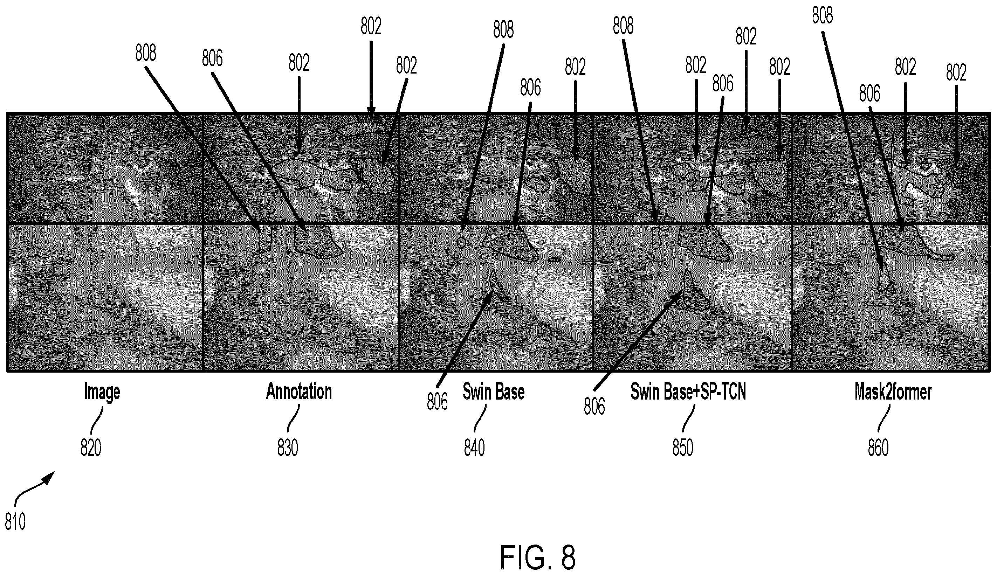

The computing system 102 includes one or more memory devices, one or more processors, a user interface device, among other components. All or a portion of the computing system 102 shown in FIG. 1 can be implemented for example, by all or a portion of computer system 800 of FIG. 8. Computing system 102 can execute one or more computer-executable instructions. The execution of the instructions facilitates the computing system 102 to perform one or more methods, including those described herein. The computing system 102 can communicate with other computing systems via a wired and/or a wireless network. In one or more examples, the computing system 102 includes one or more trained machine learning models that can detect and/or predict features of/from the surgical procedure that is being performed or has been performed earlier. Features can include structures, such as anatomical structures, surgical instruments 108 in the captured video of the surgical procedure. Features can further include events, such as phases and/or actions in the surgical procedure. Features that are detected can further include the actor 112 and/or patient 110. Based on the detection, the computing system 102, in one or more examples, can provide recommendations for subsequent actions to be taken by the actor 112. Alternatively, or in addition, the computing system 102 can provide one or more reports based on the detections. The detections by the machine learning models can be performed in an autonomous or semi-autonomous manner.

The machine learning models can include artificial neural networks, such as deep neural networks, convolutional neural networks, recurrent neural networks, vision transformers, or any other type of machine learning model. The machine learning models can be trained in a supervised, unsupervised, or hybrid manner. The machine learning models can be trained to perform detection and/or prediction using one or more types of data acquired by the CAS system 100. For example, the machine learning models can use the video data captured via the video recording system 104. Alternatively, or in addition, the machine learning models use the surgical instrumentation data from the surgical instrumentation system 106. In yet other examples, the machine learning models use a combination of video data and surgical instrumentation data.

Additionally, in some examples, the machine learning models can also use audio data captured during the surgical procedure. The audio data can include sounds emitted by the surgical instrumentation system 106 while activating one or more surgical instruments 108. Alternatively, or in addition, the audio data can include voice commands, snippets, or dialog from one or more actors 112. The audio data can further include sounds made by the surgical instruments 108 during their use.

In one or more examples, the machine learning models can detect surgical actions, surgical phases, anatomical structures, surgical instruments, and various other features from the data associated with a surgical procedure. The detection can be performed in real-time in some examples. Alternatively, or in addition, the computing system 102 analyzes the surgical data, i.e., the various types of data captured during the surgical procedure, in an offline manner (e.g., post-surgery). In one or more examples, the machine learning models detect surgical phases based on detecting some of the features, such as the anatomical structure, surgical instruments, and/or the like including combinations and/or multiples thereof.

A data collection system 150 can be employed to store the surgical data, including the video(s) captured during the surgical procedures. The data collection system 150 includes one or more storage devices 152. The data collection system 150 can be a local storage system, a cloud-based storage system, or a combination thereof. Further, the data collection system 150 can use any type of cloud-based storage architecture, for example, public cloud, private cloud, hybrid cloud, and/or the like including combinations and/or multiples thereof. In some examples, the data collection system can use a distributed storage, i.e., the storage devices 152 are located at different geographic locations. The storage devices 152 can include any type of electronic data storage media used for recording machine-readable data, such as semiconductor-based, magnetic-based, optical-based storage media, and/or the like including combinations and/or multiples thereof. For example, the data storage media can include flash-based solid-state drives (SSDs), magnetic-based hard disk drives, magnetic tape, optical discs, and/or the like including combinations and/or multiples thereof.

In one or more examples, the data collection system 150 can be part of the video recording system 104, or vice-versa. In some examples, the data collection system 150, the video recording system 104, and the computing system 102, can communicate with each other via a communication network, which can be wired, wireless, or a combination thereof. The communication between the systems can include the transfer of data (e.g., video data, instrumentation data, and/or the like including combinations and/or multiples thereof), data manipulation commands (e.g., browse, copy, paste, move, delete, create, compress, and/or the like including combinations and/or multiples thereof), data manipulation results, and/or the like including combinations and/or multiples thereof. In one or more examples, the computing system 102 can manipulate the data already stored/being stored in the data collection system 150 based on outputs from the one or more machine learning models (e.g., phase detection, anatomical structure detection, surgical tool detection, and/or the like including combinations and/or multiples thereof). Alternatively, or in addition, the computing system 102 can manipulate the data already stored/being stored in the data collection system 150 based on information from the surgical instrumentation system 106.

In one or more examples, the video captured by the video recording system 104 is stored on the data collection system 150. In some examples, the computing system 102 curates parts of the video data being stored on the data collection system 150. In some examples, the computing system 102 filters the video captured by the video recording system 104 before it is stored on the data collection system 150. Alternatively, or in addition, the computing system 102 filters the video captured by the video recording system 104 after it is stored on the data collection system 150.

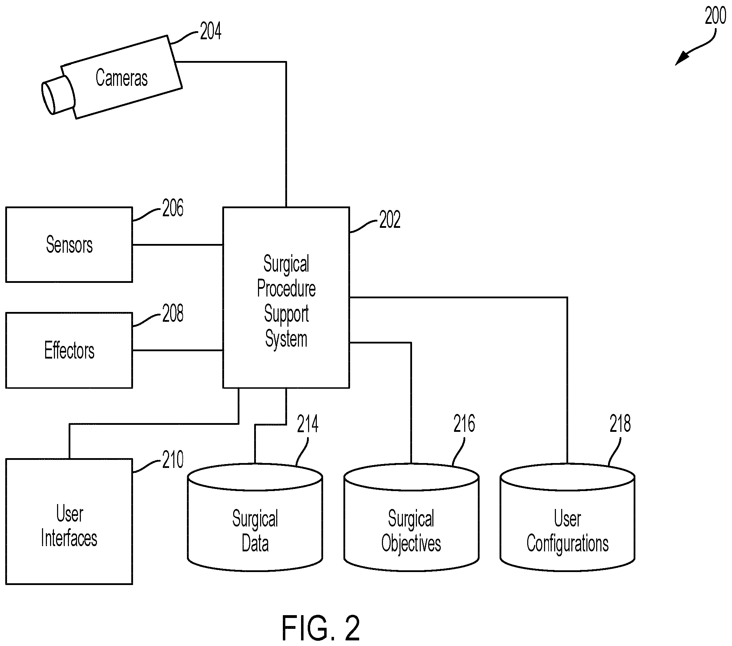

Turning now to FIG. 2, a surgical procedure system 200 is generally shown according to one or more aspects. The example of FIG. 2 depicts a surgical procedure support system 202 that can include or may be coupled to the CAS system 100 of FIG. 1. The surgical procedure support system 202 can acquire image or video data using one or more cameras 204. The surgical procedure support system 202 can also interface with one or more sensors 206 and/or one or more effectors 208. The sensors 206 may be associated with surgical support equipment and/or patient monitoring. The effectors 208 can be robotic components or other equipment controllable through the surgical procedure support system 202. The surgical procedure support system 202 can also interact with one or more user interfaces 210, such as various input and/or output devices. The surgical procedure support system 202 can store, access, and/or update surgical data 214 associated with a training dataset and/or live data as a surgical procedure is being performed on patient 110 of FIG. 1. The surgical procedure support system 202 can store, access, and/or update surgical objectives 216 to assist in training and guidance for one or more surgical procedures. User configurations 218 can track and store user preferences.

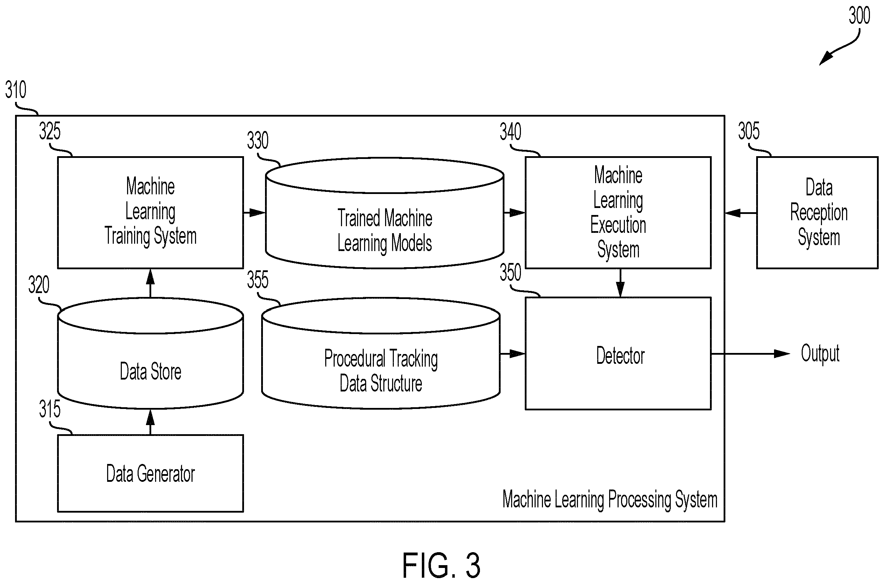

Turning now to FIG. 3, a system 300 for analyzing video and data is generally shown according to one or more aspects. In accordance with aspects, the video and data is captured from video recording system 104 of FIG. 1. The analysis can result in predicting features that include surgical phases and structures (e.g., instruments, anatomical structures, and/or the like including combinations and/or multiples thereof) in the video data using machine learning. System 300 can be the computing system 102 of FIG. 1, or a part thereof in one or more examples. System 300 uses data streams in the surgical data to identify procedural states according to some aspects.

System 300 includes a data reception system 305 that collects surgical data, including the video data and surgical instrumentation data. The data reception system 305 can include one or more devices (e.g., one or more user devices and/or servers) located within and/or associated with a surgical operating room and/or control center. The data reception system 305 can receive surgical data in real-time, i.e., as the surgical procedure is being performed. Alternatively, or in addition, the data reception system 305 can receive or access surgical data in an offline manner, for example, by accessing data that is stored in the data collection system 150 of FIG. 1.

System 300 further includes a machine learning processing system 310 that processes the surgical data using one or more machine learning models to identify one or more features, such as surgical phase, instrument, anatomical structure, and/or the like including combinations and/or multiples thereof, in the surgical data. It will be appreciated that machine learning processing system 310 can include one or more devices (e.g., one or more servers), each of which can be configured to include part or all of one or more of the depicted components of the machine learning processing system 310. In some instances, a part or all of the machine learning processing system 310 is cloud-based and/or remote from an operating room and/or physical location corresponding to a part or all of data reception system 305. It will be appreciated that several components of the machine learning processing system 310 are depicted and described herein. However, the components are just one example structure of the machine learning processing system 310, and that in other examples, the machine learning processing system 310 can be structured using a different combination of the components. Such variations in the combination of the components are encompassed by the technical solutions described herein.

The machine learning processing system 310 includes a machine learning training system 325, which can be a separate device (e.g., server) that stores its output as one or more trained machine learning models 330. The machine learning models 330 are accessible by a machine learning execution system 340. The machine learning execution system 340 can be separate from the machine learning training system 325 in some examples. In other words, in some aspects, devices that "train" the models are separate from devices that "infer," i.e., perform real-time processing of surgical data using the trained machine learning models 330.

Machine learning processing system 310, in some examples, further includes a data generator 315 to generate simulated surgical data, such as a set of synthetic images and/or synthetic video, in combination with real image and video data from the video recording system 104, to generate trained machine learning models 330. Data generator 315 can access (read/write) a data store 320 to record data, including multiple images and/or multiple videos. The images and/or videos can include images and/or videos collected during one or more procedures (e.g., one or more surgical procedures). For example, the images and/or video may have been collected by a user device worn by the actor 112 of FIG. 1 (e.g., surgeon, surgical nurse, anesthesiologist, and/or the like including combinations and/or multiples thereof) during the surgery, a non-wearable imaging device located within an operating room, an endoscopic camera inserted inside the patient 110 of FIG. 1, and/or the like including combinations and/or multiples thereof. The data store 320 is separate from the data collection system 150 of FIG. 1 in some examples. In other examples, the data store 320 is part of the data collection system 150.

Each of the images and/or videos recorded in the data store 320 for performing training (e.g., generating the machine learning models 330) can be defined as a base image and can be associated with other data that characterizes an associated procedure and/or rendering specifications. For example, the other data can identify a type of procedure, a location of a procedure, one or more people involved in performing the procedure, surgical objectives, and/or an outcome of the procedure. Alternatively, or in addition, the other data can indicate a stage of the procedure with which the image or video corresponds, rendering specification with which the image or video corresponds and/or a type of imaging device that captured the image or video (e.g., and/or, if the device is a wearable device, a role of a particular person wearing the device, and/or the like including combinations and/or multiples thereof). Further, the other data can include image-segmentation data that identifies and/or characterizes one or more objects (e.g., tools, anatomical objects, and/or the like including combinations and/or multiples thereof) that are depicted in the image or video. The characterization can indicate the position, orientation, or pose of the object in the image. For example, the characterization can indicate a set of pixels that correspond to the object and/or a state of the object resulting from a past or current user handling. Localization can be performed using a variety of techniques for identifying objects in one or more coordinate systems.

The machine learning training system 325 uses the recorded data in the data store 320, which can include the simulated surgical data (e.g., set of synthetic images and/or synthetic video) and/or actual surgical data to generate the trained machine learning models 330. The trained machine learning models 330 can be defined based on a type of model and a set of hyperparameters (e.g., defined based on input from a client device). The trained machine learning models 330 can be configured based on a set of parameters that can be dynamically defined based on (e.g., continuous or repeated) training (i.e., learning, parameter tuning). Machine learning training system 325 can use one or more optimization algorithms to define the set of parameters to minimize or maximize one or more loss functions. The set of (learned) parameters can be stored as part of the trained machine learning models 330 using a specific data structure for a particular trained machine learning model of the trained machine learning models 330. The data structure can also include one or more non-learnable variables (e.g., hyperparameters and/or model definitions).

Machine learning execution system 340 can access the data structure(s) of the trained machine learning models 330 and accordingly configure the trained machine learning models 330 for inference (e.g., prediction, classification, and/or the like including combinations and/or multiples thereof). The trained machine learning models 330 can include, for example, a fully convolutional network adaptation, an adversarial network model, an encoder, a decoder, or other types of machine learning models. The type of the trained machine learning models 330 can be indicated in the corresponding data structures. The trained machine learning models 330 can be configured in accordance with one or more hyperparameters and the set of learned parameters.

The trained machine learning models 330, during execution, receive, as input, surgical data to be processed and subsequently generate one or more inferences according to the training. For example, the video data captured by the video recording system 104 of FIG. 1 can include data streams (e.g., an array of intensity, depth, and/or RGB values) for a single image or for each of a set of frames (e.g., including multiple images or an image with sequencing data) representing a temporal window of fixed or variable length in a video. The video data that is captured by the video recording system 104 can be received by the data reception system 305, which can include one or more devices located within an operating room where the surgical procedure is being performed. Alternatively, the data reception system 305 can include devices that are located remotely, to which the captured video data is streamed live during the performance of the surgical procedure. Alternatively, or in addition, the data reception system 305 accesses the data in an offline manner from the data collection system 150 or from any other data source (e.g., local or remote storage device).

The data reception system 305 can process the video and/or data received. The processing can include decoding when a video stream is received in an encoded format such that data for a sequence of images can be extracted and processed. The data reception system 305 can also process other types of data included in the input surgical data. For example, the surgical data can include additional data streams, such as audio data, RFID data, textual data, measurements from one or more surgical instruments/sensors, and/or the like including combinations and/or multiples thereof, that can represent stimuli/procedural states from the operating room. The data reception system 305 synchronizes the different inputs from the different devices/sensors before inputting them in the machine learning processing system 310.

The trained machine learning models 330, once trained, can analyze the input surgical data, and in one or more aspects, predict and/or characterize features (e.g., structures) included in the video data included with the surgical data. The video data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data or predicting the localization of the structures with a probabilistic heatmap. In some instances, the one or more trained machine learning models 330 include or are associated with a preprocessing or augmentation (e.g., intensity normalization, resizing, cropping, and/or the like including combinations and/or multiples thereof) that is performed prior to segmenting the video data. An output of the one or more trained machine learning models 330 can include image-segmentation or probabilistic heatmap data that indicates which (if any) of a defined set of structures are predicted within the video data, a location and/or position and/or pose of the structure(s) within the video data, and/or state of the structure(s). The location can be a set of coordinates in an image/frame in the video data. For example, the coordinates can provide a bounding box. The coordinates can provide boundaries that surround the structure(s) being predicted. The trained machine learning models 330, in one or more examples, are trained to perform higher-level predictions and tracking, such as predicting a phase of a surgical procedure and tracking one or more surgical instruments used in the surgical procedure.

While some techniques for predicting a surgical phase ("phase") in the surgical procedure are described herein, it should be understood that any other technique for phase prediction can be used without affecting the aspects of the technical solutions described herein. In some examples, the machine learning processing system 310 includes a detector 350 that uses the trained machine learning models 330 to identify various items or states within the surgical procedure ("procedure"). The detector 350 can use a particular procedural tracking data structure 355 from a list of procedural tracking data structures. The detector 350 can select the procedural tracking data structure 355 based on the type of surgical procedure that is being performed. In one or more examples, the type of surgical procedure can be predetermined or input by actor 112. For instance, the procedural tracking data structure 355 can identify a set of potential phases that can correspond to a part of the specific type of procedure as "phase predictions", where the detector 350 is a phase detector.

In some examples, the procedural tracking data structure 355 can be a graph that includes a set of nodes and a set of edges, with each node corresponding to a potential phase. The edges can provide directional connections between nodes that indicate (via the direction) an expected order during which the phases will be encountered throughout an iteration of the procedure. The procedural tracking data structure 355 may include one or more branching nodes that feed to multiple next nodes and/or can include one or more points of divergence and/or convergence between the nodes. In some instances, a phase indicates a procedural action (e.g., surgical action) that is being performed or has been performed and/or indicates a combination of actions that have been performed. In some instances, a phase relates to a biological state of a patient undergoing a surgical procedure. For example, the biological state can indicate a complication (e.g., blood clots, clogged arteries/veins, and/or the like including combinations and/or multiples thereof), precondition (e.g., lesions, polyps, and/or the like including combinations and/or multiples thereof). In some examples, the trained machine learning models 330 are trained to detect an "abnormal condition," such as hemorrhaging, arrhythmias, blood vessel abnormality, and/or the like including combinations and/or multiples thereof.

Each node within the procedural tracking data structure 355 can identify one or more characteristics of the phase corresponding to that node. The characteristics can include visual characteristics. In some instances, the node identifies one or more tools that are typically in use or available for use (e.g., on a tool tray) during the phase. The node also identifies one or more roles of people who are typically performing a surgical task, a typical type of movement (e.g., of a hand or tool), and/or the like including combinations and/or multiples thereof. Thus, detector 350 can use the segmented data generated by machine learning execution system 340 that indicates the presence and/or characteristics of particular objects within a field of view to identify an estimated node to which the real image data corresponds. Identification of the node (i.e., phase) can further be based upon previously detected phases for a given procedural iteration and/or other detected input (e.g., verbal audio data that includes person-to-person requests or comments, explicit identifications of a current or past phase, information requests, and/or the like including combinations and/or multiples thereof).

The detector 350 can output predictions, such as a phase prediction associated with a portion of the video data that is analyzed by the machine learning processing system 310. The phase prediction is associated with the portion of the video data by identifying a start time and an end time of the portion of the video that is analyzed by the machine learning execution system 340. The phase prediction that is output can include segments of the video where each segment corresponds to and includes an identity of a surgical phase as detected by the detector 350 based on the output of the machine learning execution system 340. Further, the phase prediction, in one or more examples, can include additional data dimensions, such as, but not limited to, identities of the structures (e.g., instrument, anatomy, and/or the like including combinations and/or multiples thereof) that are identified by the machine learning execution system 340 in the portion of the video that is analyzed. The phase prediction can also include a confidence score of the prediction. Other examples can include various other types of information in the phase prediction that is output. Further, other types of outputs of the detector 350 can include state information or other information used to generate audio output, visual output, and/or commands. For instance, the output can trigger an alert, an augmented visualization, identify a predicted current condition, identify a predicted future condition, command control of equipment, and/or result in other such data/commands being transmitted to a support system component, e.g., through surgical procedure support system 202 of FIG. 2.

It should be noted that although some of the drawings depict endoscopic videos being analyzed, the technical solutions described herein can be applied to analyze video and image data captured by cameras that are not endoscopic (i.e., cameras external to the patient's body) when performing open surgeries (i.e., not laparoscopic surgeries). For example, the video and image data can be captured by cameras that are mounted on one or more personnel in the operating room (e.g., surgeon). Alternatively, or in addition, the cameras can be mounted on surgical instruments, walls, or other locations in the operating room. Alternatively, or in addition, the video can be images captured by other imaging modalities, such as ultrasound.

Automatically identifying the anatomy within the scene can potentially aid surgeons towards improved surgical outcomes. Automated localization of the anatomy of the video feed can be performed through video semantic segmentation models. Video segmentation models can be applied in a variety of ways; either for post-operative video processing to help training or through real-time guidance. To improve clinical utility, these models need to be accurate and importantly temporally consistent to provide helpful guidance. The success of surgical procedures such as Laparoscopic Cholecystectomy (LC) and Partial Nephrectomy (PN) can subsequently be improved through computer assistance. In PN, correctly identifying and exposing the renal vein and artery to clamp the renal artery before excising the kidney tumor is critical.

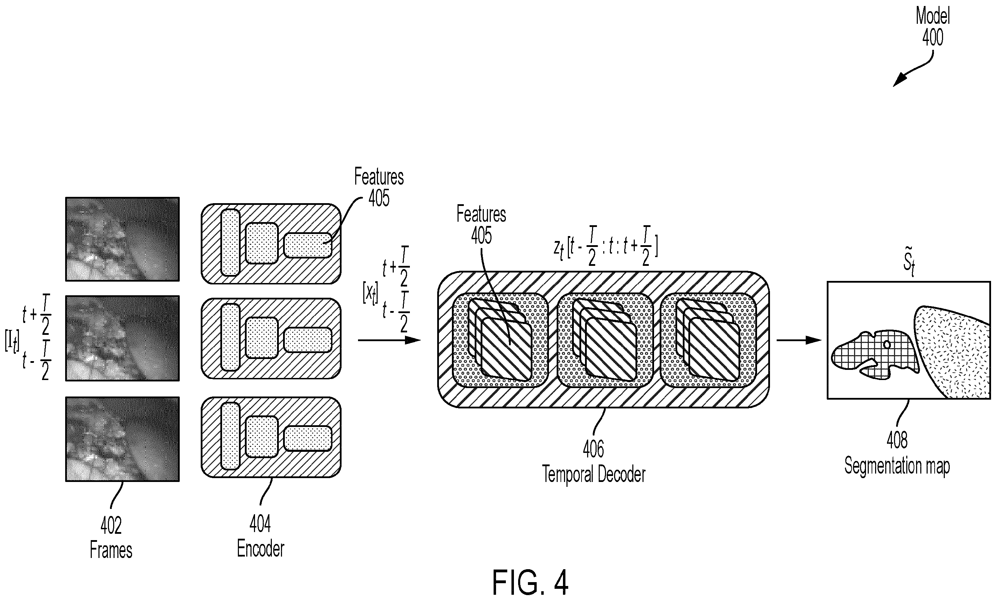

Turning now to FIG. 4, a diagram is shown of a disclosed temporal decoder model 400. The model 400 accepts a sequence of frames 402 captured during surgery as an input based on a temporal window T and extracts features for each using a static encoder 404. The features are subsequently passed to a temporal decoder 406 which learns spatio-temporal representations and finally outputs a segmentation map 408 for the central frame of the temporal batch.

Semantic segmentation models often use single images as input to the model and have shown impressive performance in a variety of single-frame datasets. However, video segmentation is fraught with challenges leading to inconsistent predictions over time when naively applying single-frame models. Manually labelling all frames in a video is laborious yielding a significant proportion of unlabeled frames in video sequences. Video sequences can also contain ambiguous and partially occluded views, which can confuse surgeons and pose risks to the patient by providing contradictory information. This problem can be alleviated by using image sequences segmenting the scene, allowing the model to use temporal context within the video. By making predictions temporally consistent, the model is more reliable in challenging video sequences where the view can be partially occluded, or the anatomy of interest has not been fully exposed.

A spatio-temporal model is disclosed that uses features extracted from a series of consecutive frames by a single-frame encoder to provide temporally and spatially consistent predictions. The main innovation is a spatio-temporal decoder that can augment existing static encoders into temporally consistent models. the disclosed modal was validated versus two static models and a recent video segmentation model. Results are reported in two datasets, the publicly available semantic segmentation CholecSeg8k dataset, which includes images from LC videos, and a private semantic segmentation dataset consisting of 137 PN procedures.

The first demonstration of the disclosed temporal model is the detection of anatomy in PN videos, which is a novel application for segmentation models. In PN, it is important to correctly identify and expose the renal vein and artery to clamp the renal artery before excising the tumor from the kidney. Hence, the disclosed temporal decoder was applied to this dataset to demonstrate consistent and smooth prediction of the relevant anatomy during PN. The results show that the performance of semantic segmentation models improve when using the disclosed temporal decoder while also increasing their temporal consistency. The disclosed embodiments provide:
(i) A spatial and temporal convolutional model that can extend any single-frame segmentation architecture to leverage temporal context in semantic segmentation. Similar architectures have not been exploited for semantic segmentation.
(ii) Quantitative investigation and benchmarking of the temporal consistency in two datasets and two different encoders. In addition to standard metrics reported for semantic segmentation, the temporal consistency of the models is evaluated using an optical flow-based metric.
(iii) Application of the disclosed temporal decoder model to detection of anatomy in PN.

A large number of semantic segmentation models, either convolutional-based or transformer-based, have relied on single images to identify objects in a scene. This can lead to spatially and temporally inconsistent predictions especially for ambiguous images for which the model needs temporal context. Previous work on video instance segmentation has used optical flow to track segmentation predictions. However, such methods are limited to using features between pairs of images and cannot leverage longest temporal context, while context aggregation also relies on the performance of the optical flow algorithm, which is computationally expensive. Transformer-based architectures have also been applied to tackle this problem, and exploited mask-constrained cross-attention to learn temporal features between time-points in an architecture that performs both semantic and instance segmentation. Other methods have used a combination of 2D encoders and 3D convolutional layers in the temporal decoder and convolutional long shortterm memory cells in the decoder. Alternative approaches also include the enforcement of temporal consistency through a loss function during training or through architectures that include high and low frame rate model branches to combine temporal context from different parts of the video. Temporal modelling has been investigated in action recognition. Temporal Convolutional Networks (TCNs) can provide a large receptive field without resulting in prohibitively large models and thus can operate on longer temporal windows. However, their benefits have not been studied in video semantic segmentation. This inspired the adaptation of the TCN towards video semantic segmentation, which is a computationally heavy task where one of the main challenges relates to modelling long temporal context. A layer, as described herein, can include one or more layers.

Disclosed is a spatio-temporal decoder based on the TCN model to augment any semantic segmentation backbone. This disclosed method provides the flexibility to transform novel segmentation architectures into a temporal segmentation network with improved accuracy and better temporal consistency.

Regarding utilized methods for the disclosed embodiments, let It ∈ {0, 255}^{W,H,C} be an RGB frame at time t with width W, height H, and C = 3 color channels. Let St ∈ {0,C}^{W,H} be the corresponding pixelwise segmentation annotation at time t with C semantic classes. Let E(·) be an encoder that extracts frame representations for each frame individually as E(·) : Iₜ → xₜ, where xt is a spatial feature representation of the frame It at time t. The disclosed embodiments provide a temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ that processes a temporal batch of features $\left|{\left[{z}_{t}\right]}_{t = t - \frac{T}{2}}^{t + \frac{T}{2}}\right.$ centered at time t within a temporal window of T frames. The result is a spatiotemporal decoder $Λ \left(⋅\right) : {\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts temporally consistent and accurate segmentation maps ${\left[{{S}^{˜}}_{t}\right]}_{t = t - \frac{T}{2}}^{t + \frac{T}{2}}$.

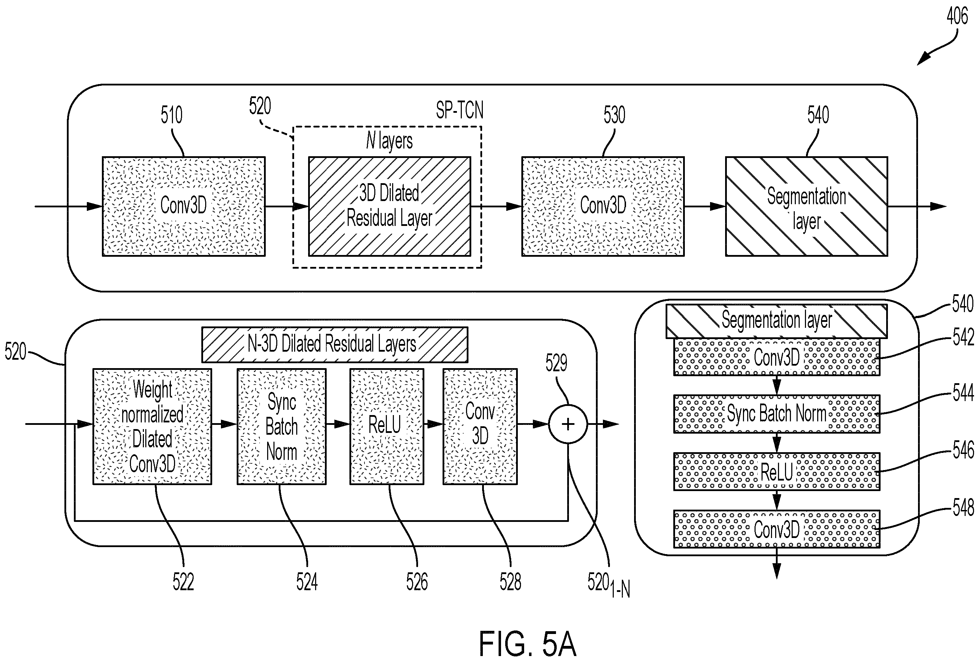

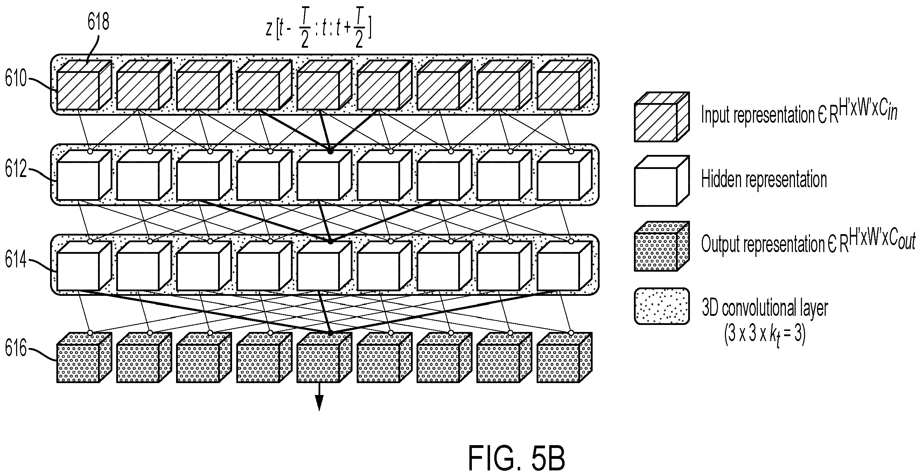

Fig. 5A shows an outline of the architecture of the disclosed temporal decoder, utilized as a Spatial Temporal Convolutional Network (SP-TCN). Fig. 5B is a schematic of the increase in receptive field caused by repeated dilated 3D convolutions with 3 successive layers using kₜ = 3 and T = 8. The exponential increase in the dilation factor facilitates a large temporal receptive field for each frame. Both inputs and outputs of the dilated TCN block are temporal representations z.

More specifically, the disclosed temporal decoder takes as input a temporal batch of static frame representations ${\left[{z}_{t}\right]}_{t = t - \frac{T}{2}}^{t + \frac{T}{2}} = E \left({\left[x\right]}_{t - \frac{T}{2}}^{t + \frac{T}{2}}\right)$ from the encoder, centered at the image It where T is the temporal window of the model.

As shown in FIG. 5A, the SP-TCN decoder 406 includes three main building blocks (e.g., a single layer, a component consisting of multiple layers, or the entire model itself): a first 3D convolutional block (or layer) applied to the encoder output 510, followed by an N-3D dilated residual layer 520 applied to the first 3D convolution layer output, a second 3D convolution layer 530 applied to the output of the N-3D dilated residual layers, and a segmentation layer 540 applied the dilated output of the second 3D convolution layer 530.

FIG. 5B illustrates how dilation facilitates an exponential increase in the temporal receptive field in successive dilated 3D convolutions. Each convolutional layer 610-616 includes kernels 618 of size (3 × 3 × kₜ) where kt determines the time kernel dimension. The convolutions are acausal, which process both past and future information. A representation zt consequently receives context from both zₜ-kₜ/2 and zₜ+kₜ/2. The 3D convolutional blocks both preceding and succeeding the N-3D dilated residual layers are only composed of a single 3D convolutional layer.

As shown in FIG. 5A, each 3D dilated residual layer 520 includes sublayers, functions or techniques, including, sequentially, weight normalization 522 applied to the dilated output of an immediately preceding 3D convolution layer (which is either the first 3D convolution layer 510 or a third 3D convolution layer 528), first batch normalization 524 to the weight normalization output, a first ReLU (Rectified Linear Unit) activation 526 applied to the output of the batch normalization, and a third 3D convolution layer 528 applied to the output of the first ReLU activation.

Regarding the 3D dilated residual layers, these layers contribute towards a larger receptive field without increasing prohibitively the depth of the network. The dilation factor dᵢ the iₜₕ dilated residual layer depends on the number of layers N and is equal to dᵢ = 2ⁱ, for i = [0,..., N - 1] where i = 0 is the first layer.

Further, as shown in FIG. 5A, the segmentation layer 540 includes further sublayers, functions or techniques, including, sequentially, a fourth 3D convolution layer 542 applied to the output of the immediately preceding 3D convolution layer 530 (e.g., the second 3D convolution layer 530), second batch normalization 544 applied to the weight normalization output, a second ReLU activation function 546 applied to the output of the second batch normalization, and a fifth 3D convolution layer 548 applied to the output of the second ReLU activation function.

The full architecture of the dilated layers and the segmentation layer are shown in FIGs. 5A and 5B.

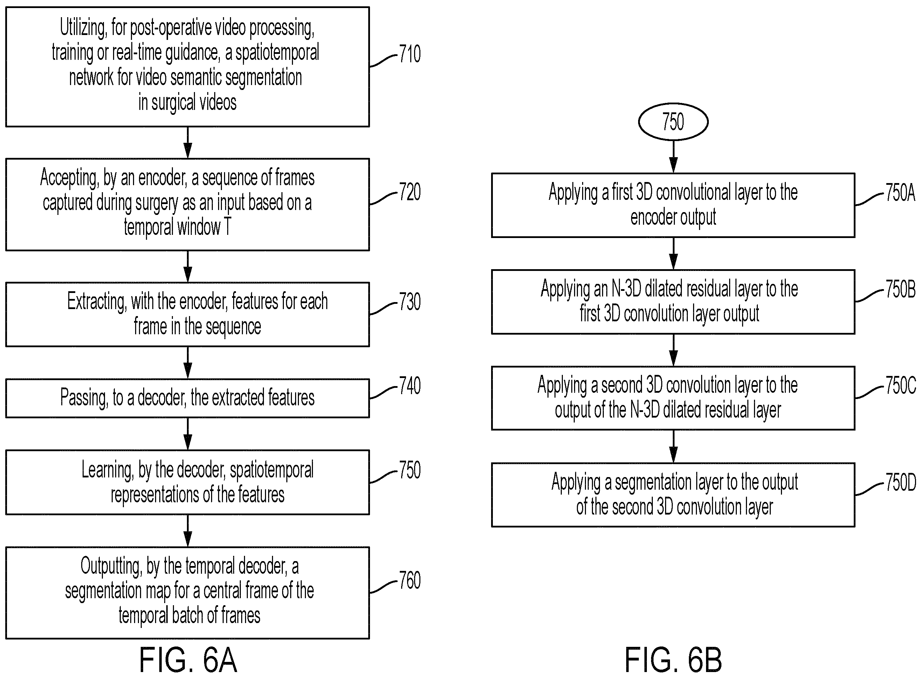

Turning to FIG. 6A, as indicated in block (or step) 710, the flowchart shown in the figure discloses a method of utilizing, for post-operative video processing, training or real-time guidance, a spatio-temporal network for video semantic segmentation in surgical videos. With further reference to both FIGS. 4 and 6A, as shown in block 720, the method includes accepting, by an encoder 404, a sequence of frames 402 captured during surgery as an input based on a temporal window T. As shown in block 730, the method includes extracting, with the encoder 404, features for each frame in the sequence. As shown in block 740, the method includes passing, to a decoder 406, the extracted features. As shown in block 750, the method includes learning, by the decoder 406, spatio-temporal representations of the features. As shown in block 760, the method includes outputting, by the decoder 406, a segmentation map 408 for a central frame of the temporal batch of frames 402.

FIG. 6B is a flowchart showing additional aspects of a temporal decoder 406 referenced in FIG. 6A (block 750). With further reference to FIGS. 5A and 6B, as shown in block 750A, the method includes applying a first 3D convolutional layer 510 to the encoder output. As shown in block 750B, the method includes applying an N-3D dilated residual layer 520 to the first 3D convolution layer output. As shown in block 750C, the method includes applying a second 3D convolution layer 530 to the output of the N-3D dilated residual layer. As shown in block 750D, the method includes applying a segmentation layer 540 to the output of the second 3D convolution layer.

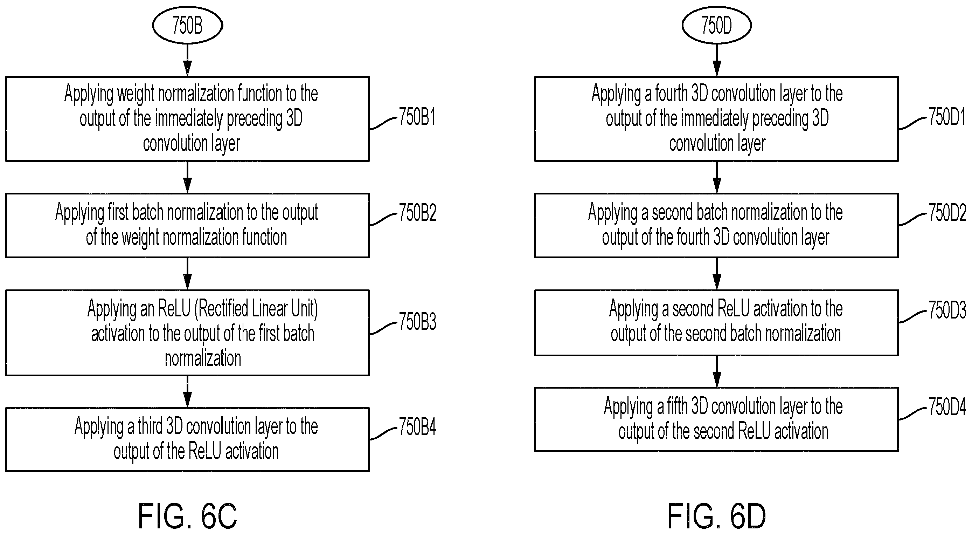

FIG. 6C is a flowchart showing a process of applying the N-3D dilated residual layer 520 to the first 3D convolution layer output referenced in FIG. 6B (block 750). With further reference to FIGS. 5A and 6C, as shown in block 750B1, the method includes applying weight normalization 522 to the output of an immediately preceding 3D convolution layer. As shown in block 750B2, the method includes applying first batch normalization 524 to the output of the weight normalization. As shown in block 750B3, the method includes applying an ReLU (Rectified Linear Unit) activation function 526 to the output of the first batch normalization. As shown in block 750B3, the method includes applying a third 3D convolution layer 528 to the output of the ReLU activation function. As shown at block 529, the output of the third 3D convolution layer 528 is added to the next layer (if any) of the N-3D dilated residual layers, which then cycles through blocks 522-528. When all of the N-3D dilated residual layers have cycled through blocks 522-528, the process of applying the N-3D dilated residual layers 520 is complete.

FIG. 6D is a flowchart showing aspects of a segmentation layer 540 referenced in FIG. 6B (block 750D). With further reference to FIGS. 5A and 6D, as shown in block 750D1, the method includes applying a fourth 3D convolution layer 542 to the output of an immediately preceding 3D convolution layer 530. As shown in block 750D2, the method includes applying a second batch normalization 544 to the output of the fourth 3D convolution layer. As shown in block 750D3, the method includes applying a second ReLU activation 546 to the output of the second batch normalization. As shown in block 750D4, the method includes applying a fifth 3D convolution layer 548 to the output of the second ReLU activation.

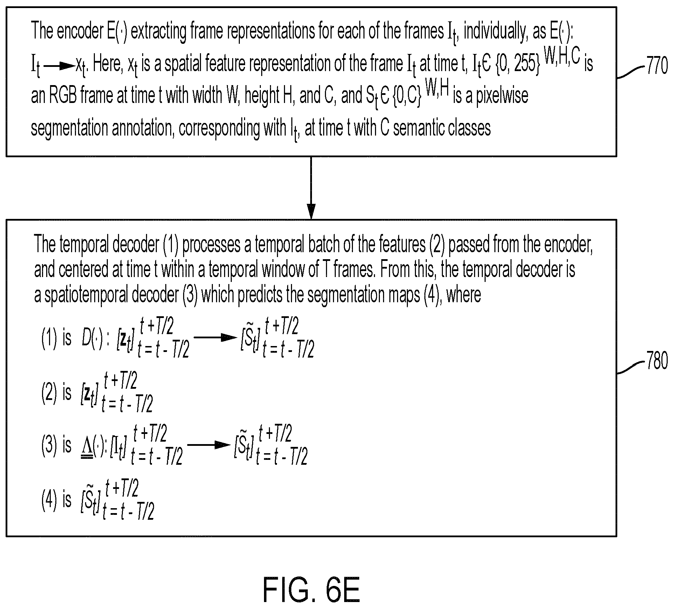

FIG. 6E is a flowchart showing further aspects of the processing by the encoder and decoder that provides the spatio-temporal decoder which predicts the segmentation maps. As shown in FIG. 6E, further indicated above, and shown in block 770, the encoder processing steps (e.g., block 730) may include the encoder E(·) extracting frame representations for each of the frames Iₜ, individually, as E(·): Iₜ → xₜ. Here, xₜ is a spatial feature representation of the frame Iₜ at time t, It ∈ {0, 255}^{W,H,C} is an RGB frame at time t with width W, height H, and C, and Sₜ ∈ {0,C}^{W,H} is a pixelwise segmentation annotation, corresponding with Iₜ, at time t with C semantic classes. As also indicated above, and as shown in block 780, the decoder processing steps (e.g., blocks 750-760) may include the temporal decoder (1) processes a temporal batch of the features (2) passed from the encoder, and centered at time t within a temporal window of T frames. From this, the temporal decoder is a spatio-temporal decoder (3) which predicts the segmentation maps (4). Here, (1) is $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$, (2) is $\left|{\left[{z}_{t}\right]}_{t = t - \frac{T}{2}}^{t + \frac{T}{2}}\right.$, (3) is $Λ \left(⋅\right) : {\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ and (4) is ${\left[{{S}^{˜}}_{t}\right]}_{t = t - \frac{T}{2}}^{t + \frac{T}{2}}$.

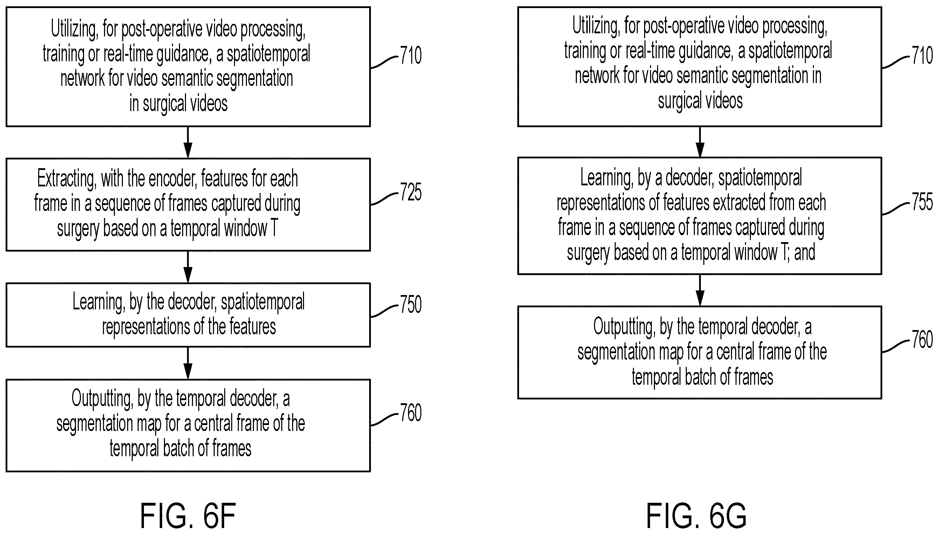

FIG. 6F shows, more generally, the method identified above. Specifically, as indicated in block (or step) 710, the flowchart shown in the figure discloses a method of utilizing, for post-operative video processing, training or real-time guidance, a spatio-temporal network for video semantic segmentation in surgical videos. With further reference to both FIGS. 4 and 6F, as shown in block 725, the method includes extracting, with the encoder 404, features of each frame in the sequence of frames 402 captured during surgery based on a temporal window T. As shown in block 750, the method includes learning, by the decoder 406, spatio-temporal representations of the features. As shown in block 760, the method includes outputting, by the decoder 406, a segmentation map 408 for a central frame of the temporal batch of frames 402.

FIG. 6G shows, yet more generally, the method identified above. Specifically, as indicated in block (or step) 710, the flowchart shown in the figure discloses a method of utilizing, for post-operative video processing, training or real-time guidance, a spatio-temporal network for video semantic segmentation in surgical videos. With further reference to both FIGS. 4 and 6G, as shown in block 755, the method includes learning, by a decoder 406, spatio-temporal representations of features extracted from each frame in the sequence of frames 402 captured during surgery based on a temporal window T. As shown in block 760, the method includes outputting, by the decoder 406, a segmentation map 408 for a central frame of the temporal batch of frames 402.

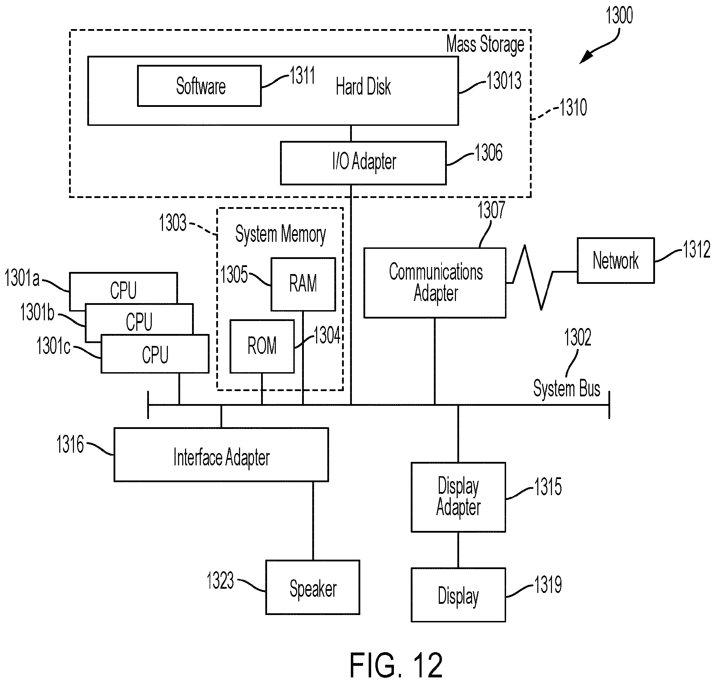

Thus, the processing shown in FIGS. 6A-6G shows a method of utilizing, for post-operative video processing, training or real-time guidance, a spatio-temporal network for video semantic segmentation in surgical videos. The processing shown in FIGS. 6A-6G is not intended to indicate that the operations are to be executed in any particular order or that all of the operations shown in these figures are to be included in every case. Additionally, the processing shown in FIGS. 6A-6G can include any suitable number of additional operations. All or a portion of the method disclosed herein can be implemented, for example, by all or a portion of CAS system 100 of FIG. 1 and/or computer system 800 of FIG. 12.

Regarding experimental validation, the disclosed temporal decoder model is benchmarked using two state-of-the-art encoders, the convolution-based light-weight version of HRNetv2 and Swin transformer to demonstrate improvement over state-of-the-art single-frame segmentation models of different size. The Mask2Former video segmentation model was also compared.

Regarding utilized datasets, the disclosed temporal decoder model is benchmarked with two datasets, a private dataset consisting of images from PN procedures and the publicly available CholecSeg8k dataset which includes images taken from a subset of LC procedures.

The private partial nephrectomy (PN) dataset includes 53,000 images from 137 procedures annotated with segmentation masks for the kidney, liver, renal vein, and renal artery. Video sequences of 10 and 15 seconds were created for images annotated at 1 and 10 frames per second (fps) respectively. The images were labelled by trained non-medical experts under the supervision of an anatomy specialist, using annotation guidelines validated by surgeons.

The public CholecSeg8k dataset includes 8,080 images from 17 videos of the Cholec80 dataset annotated at 25fps. Images are annotated with segmentation masks containing 13 classes (background, abdominal wall, liver, gastrointestinal tract, fat, grasper, connective tissue, blood, cystic duct, l-hook electrocautery, gallbladder, hepatic vein and liver ligament).

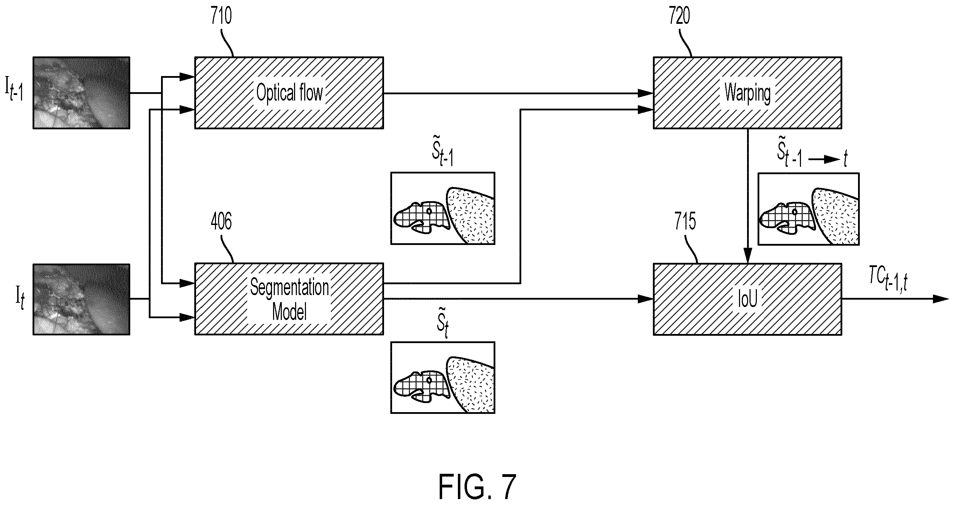

Regarding applied metrics, FIG. 7 shows a temporal consistency (TC) metric is calculated between a pair of consecutive frames Iₜ₋₁ and Iₜ. The frames are given as input to a pre-trained optical flow algorithm 710 and the disclosed segmentation (temporal decoder) model 400 under evaluation. The optical flow prediction warps *S̃*ₜ₋₁ from t - 1 to t, obtaining *S̃*_{*t-*1→}*ₜ.* The TC metric is calculated as the IoU between *S̃*_{*t*-1→*t*} and *S̃ₜ.*

That is, the segmentation performance was assessed using the Intersection over Union (IoU) metric, and the temporal consistency of the model predictions using the Temporal Consistency (TC) metric. The IoU 715 (FIG. 7) is computed per each class and image, ${IoU}_{t}^{c} \left({S}_{t}^{c}, {{S}^{˜}}_{t}^{c}\right) = \frac{{S}_{t}^{c} ∩ {{S}^{˜}}_{t}^{c}}{{S}_{t}^{c} ∪ {{S}^{˜}}_{t}^{c}}$, where ${S}_{t}^{c}$ is the annotation, ${{S}^{˜}}_{t}^{c}$ the model estimation for class c on image at time t, ∩ is the intersection operator, and U is the union operator. The IoU per class is computed as the mean across images ${IoU}^{c} = \frac{1}{T} {\sum }_{t = 1}^{T} {IoU}_{t}^{c}$, where T is the total number of images. The mean Intersection over Union (mIoU) was used across classes to report a single number, computed as $mIoU = \frac{1}{C} {\sum }_{c = 1}^{C} {IoU}^{c}$ where C is the total number of classes. The TC metric, is calculated as TC_{t-1,t} = *IoU*(*S̃ₜ, S̃*_{*t-*1→*t*})*,* where *S̃*_{*t-*1→*t*} is the warped prediction 720 from time t - 1 to time t. RAFT can be used as optical flow algorithm 710, pre-trained on a Sintel dataset. The estimated motion fields allow propagation of predicted masks to evaluate consistency over time. Figure 7 shows a visual representation of the TC metric calculation.

Regarding the experimental setup, the temporal decoders were trained using N = 4 dilated residual layers and feature size 128 for each layer, which added 69.42M parameters to the model. The Adam optimizer can be used, for example, with 1 cycle learning rate scheduling and balanced sampling of classes with 500 samples during training. A value of kt = 3 for the spatio-temporal convolutions was chosen. The model outputs a temporal batch of segmentations. However, only the loss on the TCH It of the temporal batch ${\left[{I}_{t}\right]}_{t = t - T / 2}^{t + T / 2}$ was backpropagated. The model was trained with a Cross Entropy loss. All models were trained for 100 epochs.

For PN, 85% of the videos for training was used, 5% for validation, and 10% for testing. For CholecSeg8k, since the dataset is small, 75% of the videos for training and 25% of the videos for testing was used (videos 12, 20, 48 and 55). The test set in CholecSeg8k was chosen to ensure that all classes had sufficient instances in the training set. For PN, the model weights for testing were selected based on the lowest validation loss. For CholecSeg8k, the weights in the last epoch was used due to the lack of validation set. A temporal window of T = 10 for both PN and CholecSeg8k was trained.

HRNet32 and the Swin-base transformer were used as static baselines. Both these models as encoders followed by the disclosed temporal decoder; HRNet32 + SP-TCN and Swin + SP-TCN. Mask2Former was considered as a temporal model benchmark. This was trained using pairs of frames selected within the same respective window sizes. For the PN dataset, unlabeled frames were used so that the windows include frames only at 10 fps and not a combination of frames of frame rates to facilitate model learning. For CholecSeg8k, the frames provided in the dataset were used only as they provide very dense temporal context with frames at 25 fps. All models were trained on 2 DGX A100 GPUs.

Quantitative and qualitative results for all models and datasets were considered. Table 1 summarizes the mean IoU and mean TC for all models and all datasets. Results indicate that the segmentation performance improves when using the disclosed temporal decoder model 400 for both datasets in comparison to single-frame models. In particular, a 1.04% to 1.3% increase of the mean IoU is reported for PN with the use of the temporal decoder. Similarly, a 0.960% to 4.27% increase of the mean IoU is reported when using the SP-TCN with single-frame encoders compared to the single-frame model for CholecSeg8k. Similarly, results indicate that the temporal consistency improves with an increase of 6.29%-7.23% in PN, and an increase of 2.56-3.20% in CholecSeg8k dataset. In both datasets, the best performing combination is the Swin base encoder + SP-TCN.

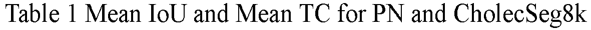

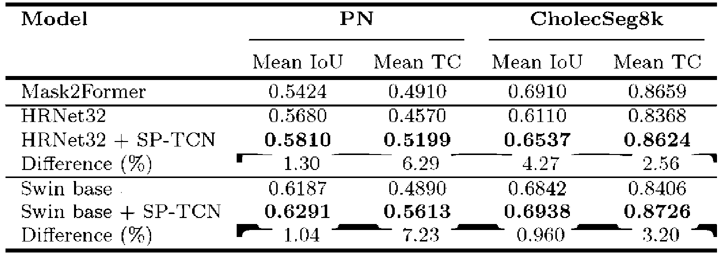

Per-class metrics are presented in Table 2, 3 for PN and for Cholecseg8k in Tables 4 and 5. Results show that kidney is the class that obtains the most consistent improvement across all combinations. Similar results are observed for CholecSeg8k as well, with Mask2Former giving similar performance to the best performing Swin base + SP-TCN. The absolute numbers for TC are higher for CholecSeg8k as the time interval between images is shorter than in the PN dataset (25 fps compared to 1 and 10 respectively), hence less motion is observed between frames and therefore there is higher overlap between predictions in subsequent frames.

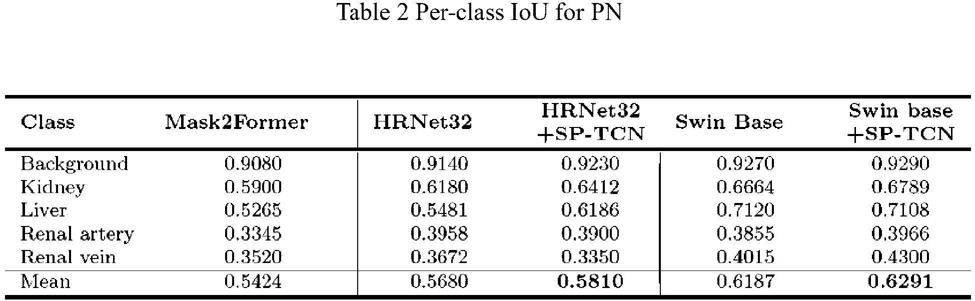

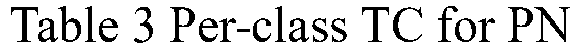

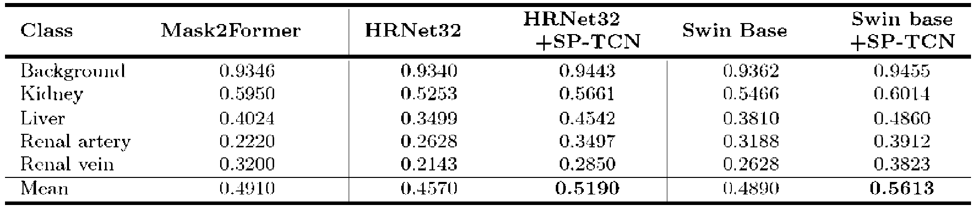

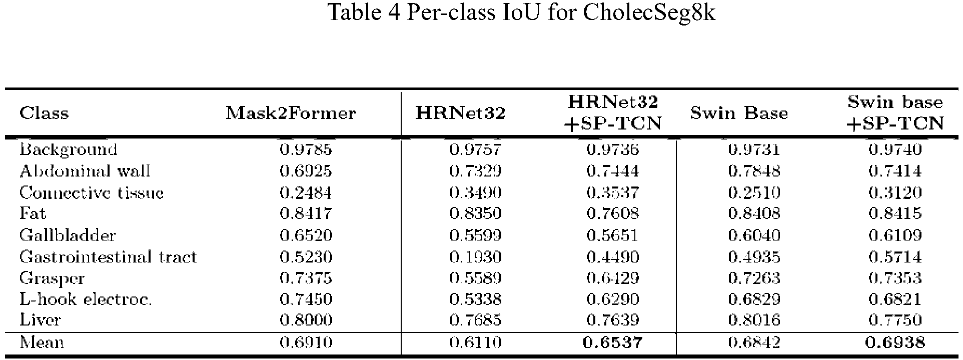

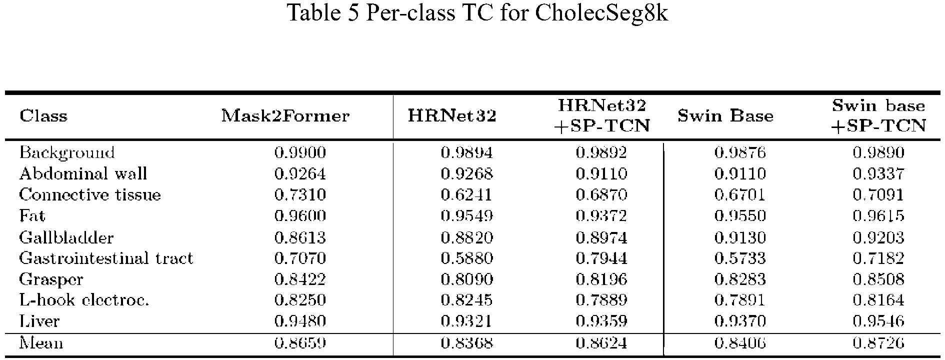

Fig. 8 shows example predictions 810 for the PN dataset. The figures show example segmentations for kidney (pink) 802, liver (cyan) 804, renal vein (blue) 806 and renal artery (green) 808. These examples include, in adjacent columns, dataset images 820, frames from annotation procedures 830, Swin base 840, Swin base + SP-TCN 850 and Mask2former 860. The examples show that segmentation predictions are more temporally and spatially consistent. For instance, the borders for the kidney flicker less and the liver segmentation does not under-segment across frames (left sequence). In addition, the temporal decoder recovers missed predictions by the single-frame model within the image sequence for the renal artery (right sequence).

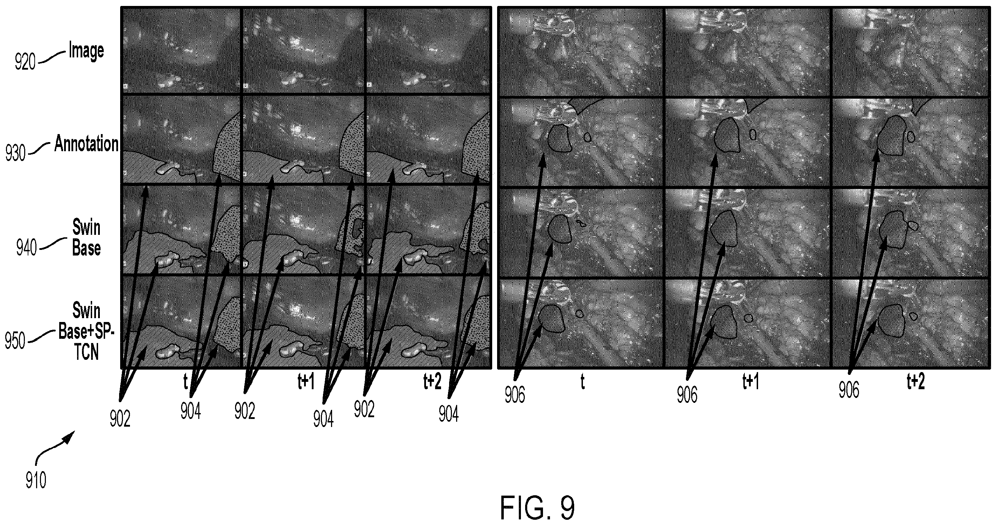

Fig. 9 shows example predictions 910 for kidney (pink) 902, liver (cyan) 904, renal vein (blue) 906 and renal artery (green) 908 for two sequences of three images from the PN dataset. In the top row images 920 at three different timestamps of 0.1 seconds apart. In the second row 930, data is obtained from annotations of procedures. In the third row 94 the data is Swin base. In the fourth row 950, data is Swin base + SP-TCN (i.e., the disclosed model).

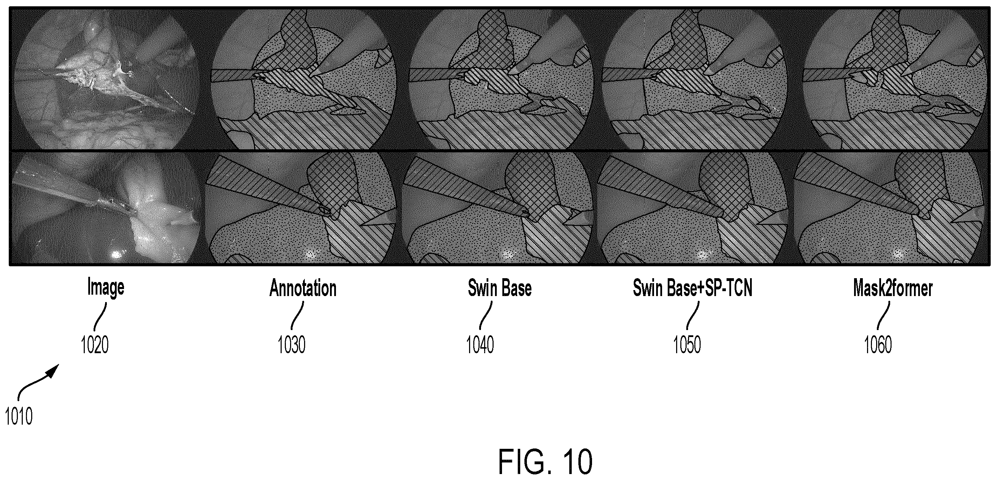

Fig. 10 shows example predictions for the CholecSeg8k dataset for two sequences of two images. These examples include, in adjacent columns, image 1020, ground-truth (annotation) 1030, Swin base 1040, Swin base + SP-TCN 1050 and Mask2former 1060.

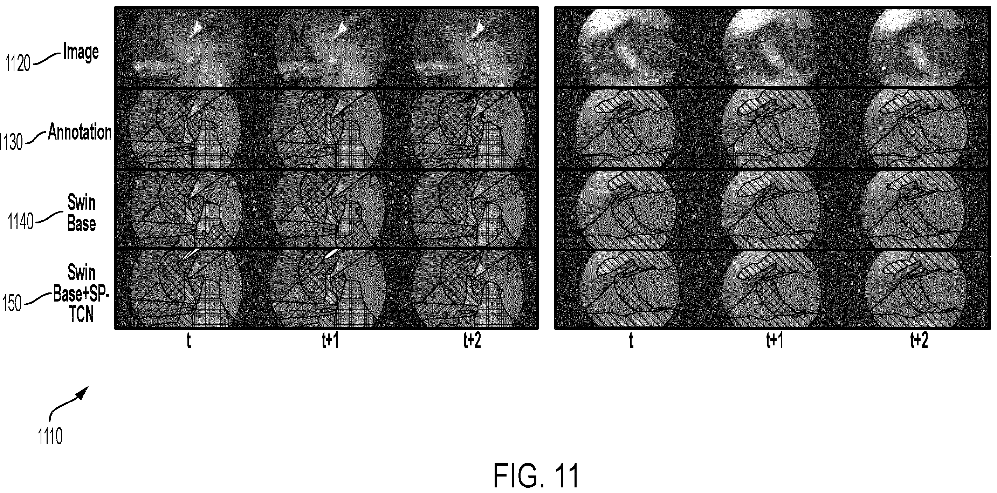

Fig. 11 shows example predictions 1110 for the CholecSeg8k dataset for two sequences of three images. These examples include, in adjacent rows, image 1120, annotation 1130, Swin base 1140 and Swin base + SP-TCN 1150 (i.e., the disclosed model). That is, in the top row 1120, images are provided at three different timestamps of 0.04 seconds apart. In the second row 1130, data is shown from annotations of procedures. In the third row 1140 data is Swin base. In the fourth row, data is Swin base + SP-TCN (i.e., the disclosed model).

In some embodiments, sufficient information is provided for the temporal decoder to recover missing information. In some embodiments, the images contained in the temporal window should are of consistent time spacing, and specifically within short time steps.

The disclosed embodiments, provide a temporal model that can be used with any segmentation encoder to transform it to a video semantic segmentation model. The model is based on the TCN model is modified to effectively use both spatial and temporal information. Its performance was validated on two datasets, the public CholecSeg8k and the private PN dataset. Results showed that the disclosed temporal decoder model consistently improves both segmentation and temporal consistency performance. The feasibility was shown of performing fine-grained semantic segmentation on PN, which has not been investigated before in the literature. Improving temporal consistency for models used in PN can facilitate correct identification of the renal vessels, and therefore assess safer clamping of the renal artery.

Thus, according to an aspect of the disclosure, a computer-implemented method includes: utilizing, for post-operative video processing, training or real-time guidance, a spatio-temporal network for video semantic segmentation in surgical videos, which includes: accepting, by an encoder, a sequence of frames captured during surgery as an input based on a temporal window T; extracting, with the encoder, features for each frame in the sequence; passing, to a decoder, the extracted features; learning, by the decoder, spatio-temporal representations of the features; and outputting, by the decoder, a segmentation map for a central frame of a temporal batch of frames.

According to another aspect of the disclosure, directed to the computer-implemented method, the spatio-temporal network is a spatio-temporal convolutional network.

According to another aspect of the disclosure, directed to the computer-implemented method, the encoder is a static encoder.

According to another aspect of the disclosure, directed to the computer-implemented method, the decoder is a temporal decoder.

According to another aspect of the disclosure, directed to the computer-implemented method, the temporal decoder includes: applying a first 3D convolutional layer to the encoder output; applying an additive series of N-3D dilated residual layers to the first 3D convolution layer output; applying a second 3D convolution layer to the output of the N-3D dilated residual layers; and applying a segmentation layer to the output of the second 3D convolution layer.

According to another aspect of the disclosure, directed to the computer-implemented method, each 3D dilated residual layer includes: applying weight normalization to the output of an immediately preceding 3D convolution layer; applying first batch normalization to the output of the weight normalization; applying a rectified linear unit (ReLU) activation to the output of the first batch normalization; and applying a third 3D convolution layer to the output of the ReLU activation.

According to another aspect of the disclosure, directed to the computer-implemented method, the segmentation layer includes: applying a fourth 3D convolution layer to the output of the immediately preceding 3D convolution layer; applying second batch normalization to the output of the fourth 3D convolution layer; applying a second ReLU activation to the output of the second batch normalization; and applying a fifth 3D convolution layer to the output of the second ReLU activation.

According to another aspect of the disclosure, directed to the computer-implemented method, the encoder E(·) extracts frame representations for each of the frames It, individually, as E(·): Iₜ → xₜ, where xt is a spatial feature representation of the frame It at time t, wherein: It ∈ {0, 255}^{W,H,C} is an RGB frame at time t with width W, height H, and C; St ∈ {0,C}^{W,H} is a pixelwise segmentation annotation, corresponding with Iₜ, at time t with C semantic classes, and the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features $\left|{\left[{z}_{t}\right]}_{t = t - \frac{T}{2}}^{t + \frac{T}{2}}\right.$, passed from the encoder, and centered at time t within a temporal window of T frames, whereby the temporal decoder is a spatio-temporal decoder $Λ \left(⋅\right) : {\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

According to another aspect of the disclosure, a system includes: a data store comprising video data associated with a surgical procedure; and a machine learning training system configured to: utilize, for post-operative video processing, training or real-time guidance, a spatio-temporal network for video semantic segmentation in surgical videos, wherein the system is configured to: extract, with an encoder, features of each frame in a sequence of frames captured during surgery based on a temporal window T; learn, by a decoder, spatio-temporal representations of the features; and output, by the decoder, a segmentation map for a central frame of a temporal batch of frames.

According to another aspect of the disclosure, directed to the system, the encoder, which passes the extracted features to the decoder is a static encoder, and the decoder is a temporal decoder.

According to another aspect of the disclosure, directed to the system, the encoder E(·) extracts frame representations for each of the frames Iₜ, individually, as E(·): Iₜ → xₜ, where xt is a spatial feature representation of the frame It at time t, wherein: It ∈ {0, 255}^{W,H,C} is an RGB frame at time t with width W, height H, and C; Sₜ ∈ {0,C}^{W,H} is a pixelwise segmentation annotation, corresponding with It, at time t with C semantic classes, and the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features $\left|{\left[{z}_{t}\right]}_{t = t - \frac{T}{2}}^{t + \frac{T}{2}}\right.$, passed from the encoder, and centered at time t within a temporal window of T frames, whereby the temporal decoder is a spatio-temporal decoder $Λ \left(⋅\right) : {\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

According to another aspect of the disclosure, directed to the system, the temporal decoder includes: applying a first 3D convolutional layer to the encoder output; applying an additive series of N-3D dilated residual layers to the first 3D convolution layer output; applying a second 3D convolution layer to the output of the N-3D dilated residual layers; and applying a segmentation layer to the output of the second 3D convolution layer; and each 3D dilated residual layer includes: applying weight normalization to the output of an immediately preceding 3D convolution layer; applying first batch normalization to the output of the weight normalization; applying a rectified linear unit (ReLU) activation to the output of the first batch normalization; and applying a third 3D convolution layer to the output of the ReLU activation.

According to another aspect of the disclosure, directed to the system, the segmentation layer includes: applying a fourth 3D convolution layer to the output of the immediately preceding 3D convolution layer; applying second batch normalization to the output of the fourth 3D convolution layer; applying a second ReLU activation to the output of the second batch normalization; and applying a fifth 3D convolution layer to the output of the second ReLU activation.

According to another aspect of the disclosure, a computer program product includes a memory device having computer executable instructions stored thereon, which when executed by one or more processors cause the one or more processors to perform a plurality of operations comprising: utilizing, for post-operative video processing, training or real-time guidance, a spatio-temporal network for video semantic segmentation in surgical videos, which includes: learning, by a decoder, spatio-temporal representations of features extracted from each frame in a sequence of frames captured during surgery based on a temporal window T; and outputting, by the decoder, a segmentation map for a central frame of a temporal batch of frames.

According to another aspect of the disclosure, directed to the computer program product, an encoder extracts the features from each of the frames in the sequence of frames captured during surgery based on the temporal window T and passes the extracted features to the decoder, wherein the encoder is a static encoder.

According to another aspect of the disclosure, directed to the computer program product, the decoder is a temporal decoder.

According to another aspect of the disclosure, directed to the computer program product, the temporal decoder includes: applying a first 3D convolutional layer to the encoder output; applying an additive series of N-3D dilated residual layers to the first 3D convolution layer output; applying a second 3D convolution layer to the output of the N-3D dilated residual layers; and applying a segmentation layer to the output of the second 3D convolution layer.

According to another aspect of the disclosure, directed to the computer program product, each 3D dilated residual layer includes: applying weight normalization to the output of an immediately preceding 3D convolution layer; applying first batch normalization to the output of the weight normalization; applying a rectified linear unit (ReLU) activation to the output of the first batch normalization; and applying a third 3D convolution layer to the output of the ReLU activation.

According to another aspect of the disclosure, directed to the computer program product, the segmentation layer includes: applying a fourth 3D convolution layer to the output of the immediately preceding 3D convolution layer; applying second batch normalization to the output of the fourth 3D convolution layer; applying a second ReLU activation to the output of the second batch normalization; and applying a fifth 3D convolution layer to the output of the second ReLU activation.

According to another aspect of the disclosure, directed to the computer program product, the encoder E(·) extracts frame representations for each of the frames It, individually, as E(·): Iₜ → xₜ, where xt is a spatial feature representation of the frame It at time t, wherein: Iₜ ∈ {0, 255}^{W,H,C} is an RGB frame at time t with width W, height H, and C; Sₜ ∈ {0,C}^{W,H} is a pixelwise segmentation annotation, corresponding with Iₜ, at time t with C semantic classes, and the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features $\left|{\left[{z}_{t}\right]}_{t = t - \frac{T}{2}}^{t + \frac{T}{2}}\right.$, passed from the encoder, and centered at time t within a temporal window of T frames, whereby the temporal decoder is a spatio-temporal decoder $Λ \left(⋅\right) : {\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

Turning now to FIG. 12, a computer system 1300 is generally shown in accordance with an aspect. The computer system 1300 can be an electronic computer framework comprising and/or employing any number and combination of computing devices and networks utilizing various communication technologies, as described herein. The computer system 1300 can be easily scalable, extensible, and modular, with the ability to change to different services or reconfigure some features independently of others. The computer system 1300 may be, for example, a server, desktop computer, laptop computer, tablet computer, or smartphone. In some examples, computer system 1300 may be a cloud computing node. Computer system 1300 may be described in the general context of computer-executable instructions, such as program modules, being executed by a computer system. Generally, program modules may include routines, programs, objects, components, logic, data structures, and so on that perform particular tasks or implement particular abstract data types. Computer system 1300 may be practiced in distributed cloud computing environments where tasks are performed by remote processing devices that are linked through a communications network. In a distributed cloud computing environment, program modules may be located in both local and remote computer system storage media, including memory storage devices.

As shown in FIG. 12, the computer system 1300 has one or more central processing units (CPU(s)) 1301a, 1301b, 1301c, etc. (collectively or generically referred to as processor(s) 1301). The processors 1301 can be a single-core processor, multi-core processor, computing cluster, or any number of other configurations. The processors 1301 can be any type of circuitry capable of executing instructions. The processors 1301, also referred to as processing circuits, are coupled via a system bus 1302 to a system memory 1303 and various other components. The system memory 1303 can include one or more memory devices, such as read-only memory (ROM) 1304 and a random-access memory (RAM) 1305. The ROM 1304 is coupled to the system bus 1302 and may include a basic input/output system (BIOS), which controls certain basic functions of the computer system 1300. The RAM is read-write memory coupled to the system bus 1302 for use by the processors 1301. The system memory 1303 provides temporary memory space for operations of said instructions during operation. The system memory 1303 can include random access memory (RAM), read-only memory, flash memory, or any other suitable memory systems.

The computer system 1300 comprises an input/output (I/O) adapter 1306 and a communications adapter 1307 coupled to the system bus 1302. The I/O adapter 1306 may be a small computer system interface (SCSI) adapter that communicates with a hard disk 13013 and/or any other similar component. The I/O adapter 1306 and the hard disk 13013 are collectively referred to herein as a mass storage 1310.

Software 1311 for execution on the computer system 1300 may be stored in the mass storage 1310. The mass storage 1310 is an example of a tangible storage medium readable by the processors 1301, where the software 1311 is stored as instructions for execution by the processors 1301 to cause the computer system 1300 to operate, such as is described hereinbelow with respect to the various Figures. Examples of computer program product and the execution of such instruction is discussed herein in more detail. The communications adapter 1307 interconnects the system bus 1302 with a network 1312, which may be an outside network, enabling the computer system 1300 to communicate with other such systems. In one aspect, a portion of the system memory 1303 and the mass storage 1310 collectively store an operating system, which may be any appropriate operating system to coordinate the functions of the various components shown in FIG. 12.

Additional input/output devices are shown as connected to the system bus 1302 via a display adapter 1315 and an interface adapter 1316. In one aspect, the adapters 1306, 1307, 1315, and 1316 may be connected to one or more I/O buses that are connected to the system bus 1302 via an intermediate bus bridge (not shown). A display 1319 (e.g., a screen or a display monitor) is connected to the system bus 1302 by a display adapter 1315, which may include a graphics controller to improve the performance of graphics-intensive applications and a video controller. A keyboard, a mouse, a touchscreen, one or more buttons, a speaker, etc., can be interconnected to the system bus 1302 via the interface adapter 1316, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI). Thus, as configured in FIG. 12, the computer system 1300 includes processing capability in the form of the processors 1301, and storage capability including the system memory 1303 and the mass storage 1310, input means such as the buttons, touchscreen, and output capability including the speaker 1323 and the display 1319.

In some aspects, the communications adapter 1307 can transmit data using any suitable interface or protocol, such as the internet small computer system interface, among others. The network 1312 may be a cellular network, a radio network, a wide area network (WAN), a local area network (LAN), or the Internet, among others. An external computing device may connect to the computer system 1300 through the network 1312. In some examples, an external computing device may be an external web server or a cloud computing node.

It is to be understood that the block diagram of FIG. 12 is not intended to indicate that the computer system 1300 is to include all of the components shown in FIG. 12. Rather, the computer system 1300 can include any appropriate fewer or additional components not illustrated in FIG. 12 (e.g., additional memory components, embedded controllers, modules, additional network interfaces, etc.). Further, the aspects described herein with respect to computer system 1300 may be implemented with any appropriate logic, wherein the logic, as referred to herein, can include any suitable hardware (e.g., a processor, an embedded controller, or an application-specific integrated circuit, among others), software (e.g., an application, among others), firmware, or any suitable combination of hardware, software, and firmware, in various aspects. Various aspects can be combined to include two or more of the aspects described herein.

Aspects disclosed herein may be a system, a method, and/or a computer program product at any possible technical detail level of integration. The computer program product may include a computer-readable storage medium (or media) having computer-readable program instructions thereon for causing a processor to carry out various aspects.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device, such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network, and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out operations of the present disclosure may be assembler instructions, instruction-set-architecture (ISA) instructions, machine instructions, machine-dependent instructions, microcode, firmware instructions, state-setting data, configuration data for integrated circuitry, or either source-code or object code written in any combination of one or more programming languages, including an object-oriented programming language, such as Smalltalk, C++, high-level languages such as Python, or the like, and procedural programming languages, such as the "C" programming language or similar programming languages. The computer-readable program instructions may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some aspects, electronic circuitry including, for example, programmable logic circuitry, field-programmable gate arrays (FPGA), or programmable logic arrays (PLA) may execute the computer-readable program instruction by utilizing state information of the computer-readable program instructions to personalize the electronic circuitry, in order to perform aspects of the present disclosure.

Aspects are described herein with reference to flowchart illustrations and/or block diagrams of methods, apparatus (systems), and computer program products according to aspects of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a computer system, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other devices to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various aspects. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various aspects have been presented for purposes of illustration but are not intended to be exhaustive or limited to the aspects disclosed. The terminology used herein was chosen to best explain the principles of the aspects, the practical application or technical improvement over technologies found in the marketplace, or to enable others of ordinary skill in the art to understand the aspects described herein.

Various aspects are described herein with reference to the related drawings. Alternative aspects can be devised without departing from the scope of the invention as defined in the claims. Various connections and positional relationships (e.g., over, below, adjacent, etc.) are set forth between elements in the following description and in the drawings. These connections and/or positional relationships, unless specified otherwise, can be direct or indirect, and the present disclosure is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

The following definitions and abbreviations are to be used for the interpretation of the claims and the specification. As used herein, the terms "comprises," "comprising," "includes," "including," "has," "having," "contains," or "containing," or any other variation thereof are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any aspect or design described herein as "exemplary" is not necessarily to be construed as preferred or advantageous over other aspects or designs. The terms "at least one" and "one or more" may be understood to include any integer number greater than or equal to one, i.e., one, two, three, four, etc. The terms "a plurality" may be understood to include any integer number greater than or equal to two, i.e., two, three, four, five, etc. The term "connection" may include both an indirect "connection" and a direct "connection."

The terms "about," "substantially," "approximately," and variations thereof are intended to include the degree of error associated with measurement of the particular quantity based upon the equipment available at the time of filing the application. For example, "about" can include a range of ± 8% or 5%, or 2% of a given value.

For the sake of brevity, conventional techniques related to making and using aspects may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

It should be understood that various aspects disclosed herein may be combined in different combinations than the combinations specifically presented in the description and accompanying drawings. It should also be understood that, depending on the example, certain acts or events of any of the processes or methods described herein may be performed in a different sequence, may be added, merged, or left out altogether (e.g., all described acts or events may not be necessary to carry out the techniques). In addition, while certain aspects of this disclosure are described as being performed by a single module or unit for purposes of clarity, it should be understood that the techniques of this disclosure may be performed by a combination of units or modules associated with, for example, a medical device.

In one or more examples, the described techniques may be implemented in hardware, software, firmware, or any combination thereof. If implemented in software, the functions may be stored as one or more instructions or code on a computer-readable medium and executed by a hardware-based processing unit. Computer-readable media may include non-transitory computer-readable media, which corresponds to a tangible medium, such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), graphics processing units (GPUs), microprocessors, application-specific integrated circuits (ASICs), field programmable logic arrays (FPGAs), or other equivalent integrated or discrete logic circuitry. Accordingly, the term "processor" as used herein may refer to any of the foregoing structure or any other physical structure suitable for implementation of the described techniques. Also, the techniques could be fully implemented in one or more circuits or logic elements.

## Claims

1. A computer-implemented method comprising:
utilizing, for training and post-operative video processing, or real-time guidance, a spatio-temporal network for video semantic segmentation in surgical videos, which includes:
accepting, by an encoder, a sequence of frames captured during surgery as an input based on a temporal window T;
extracting, with the encoder, features for each frame in the sequence;
passing, to a decoder, the extracted features;
learning, by the decoder, spatio-temporal representations of the features; and
outputting, by the decoder, a segmentation map for a central frame of a temporal batch of frames, wherein the decoder is a temporal decoder, wherein:
outputting by the temporal decoder includes:
applying a first 3D convolutional layer to the encoder output;
applying an additive series of N-3D dilated residual layers to the first 3D convolution layer output;
applying a second 3D convolution layer to the output of the N-3D dilated residual layers; and
applying a segmentation layer to the output of the second 3D convolution layer.
wherein:
applying each 3D dilated residual layer includes:
applying normalized weights to the output of an immediately preceding 3D convolution layer;
applying first batch normalization to the output of applying normalized weights;
applying a rectified linear unit (ReLU) activation to the output of the first batch normalization; and
applying a third 3D convolution layer to the output of the ReLU activation.

2. The computer implemented method of claim 1, wherein the utilizing excludes utilizing for real-time guidance.

3. The computer-implemented method of claim 1 or 2, wherein the spatio-temporal network is a spatio-temporal convolutional network.

4. The computer-implemented method of claim 3, wherein the encoder is a static encoder.

5. The computer-implemented method of claim 1, wherein
the segmentation layer includes:
applying a fourth 3D convolution layer to the output of the immediately preceding 3D convolution layer;
applying second batch normalization to the output of the fourth 3D convolution layer;
applying a second ReLU activation to the output of the second batch normalization; and
applying a fifth 3D convolution layer to the output of the second ReLU activation.

6. The computer-implemented method of any preceding claim, wherein:
the encoder E(·) extracts frame representations for each of the frames It, individually, as E(·): It → xₜ, where xₜ is a spatial feature representation of the frame It at time t, wherein:
Iₜ ∈ {0, 255}^{W,H,C} is an RGB frame at time t with width W, height H, and C;
St E {0,C}^{W,H} is a pixelwise segmentation annotation, corresponding with It, at time t with C semantic classes, and
the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features ${\left|\left[{z}_{t}\right]\right.}_{t = t - \frac{T}{2}}^{t + \frac{T}{2}}$, passed from the encoder, and centered at time t within a temporal window of T frames, whereby the temporal decoder is a spatio-temporal decoder Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

7. A system comprising:
a data store comprising video data associated with a surgical procedure; and
a machine learning training system configured to:
utilize, for training and post-operative video processing, or real-time guidance, a spatio-temporal network for video semantic segmentation in surgical videos, wherein the system is configured to:
extract, with an encoder, features of each frame in a sequence of frames captured during surgery based on a temporal window T;
learn, by a decoder, spatio-temporal representations of the features; and
output, by the decoder, a segmentation map for a central frame of a temporal batch of frames, wherein:
the temporal decoder includes means for: applying a first 3D convolutional layer to the encoder output;
applying an additive series of N-3D dilated residual layers to the first 3D convolution layer output;
applying a second 3D convolution layer to the output of the N-3D dilated residual layers; and
applying a segmentation layer to the output of the second 3D convolution layer; and each 3D dilated residual layer includes means for:
applying normalized weights to the output of an immediately preceding 3D convolution layer;
applying first batch normalization to the output of applying normalized weights applying a rectified linear unit (ReLU) activation to the output of the first batch normalization; and
applying a third 3D convolution layer to the output of the ReLU activation.

8. The system of claim 7, wherein
the encoder, which passes the extracted features to the decoder is a static encoder, and the decoder is a temporal decoder.

9. The system of claim 7, wherein:
the encoder E(·) extracts frame representations for each of the frames Iₜ, individually, as E(·): Iₜ → xₜ, where xₜ is a spatial feature representation of the frame Iₜ at time t, wherein:
Iₜ ∈ {0, 255}^{W,H,C} is an RGB frame at time t with width W, height H, and C;
Sₜ ∈ {0,C}^{W,H} is a pixelwise segmentation annotation, corresponding with It, at time t with C semantic classes, and
the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features ${\left|\left[{z}_{t}\right]\right.}_{t = t - \frac{T}{2}}^{t + \frac{T}{2}}$, passed from the encoder, and centered at time t within a temporal window of T frames, whereby the temporal decoder is a spatio-temporal decoder Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

10. The system of claim 7, wherein:
the segmentation layer includes:
applying a fourth 3D convolution layer to the output of the immediately preceding 3D convolution layer;
applying second batch normalization to the output of the fourth 3D convolution layer;
applying a second ReLU activation to the output of the second batch normalization; and
applying a fifth 3D convolution layer to the output of the second ReLU activation.

11. A computer program product comprising a memory device having computer executable instructions stored thereon, which when executed by one or more processors cause the one or more processors to perform a plurality of operations comprising:
utilizing, for training and post-operative video processing, or real-time guidance, a spatio-temporal network for video semantic segmentation in surgical videos, which includes:
learning, by a decoder, spatio-temporal representations of features extracted from each frame in a sequence of frames captured during surgery based on a temporal window T; and
outputting, by the decoder, a segmentation map for a central frame of a temporal batch of frames, wherein an encoder extracts the features from each of the frames in the sequence of frames captured during surgery based on the temporal window T and passes the extracted features to the decoder, wherein the encoder is a static encoder, wherein the decoder is a temporal decoder,
outputting by the temporal decoder includes:
applying a first 3D convolutional layer to the encoder output;
applying an additive series of N-3D dilated residual layers to the first 3D convolution layer output;
applying a second 3D convolution layer to the output of the N-3D dilated residual layers; and
applying a segmentation layer to the output of the second 3D convolution layer, wherein:
applying each 3D dilated residual layer includes:
applying normalized weights to the output of an immediately preceding 3D convolution layer;
applying first batch normalization to the output of applying normalized weights;
applying a rectified linear unit (ReLU) activation to the output of the first batch normalization; and
applying a third 3D convolution layer to the output of the ReLU activation.

12. The computer program product of claim 11, wherein
the segmentation layer includes:
applying a fourth 3D convolution layer to the output of the immediately preceding 3D convolution layer;
applying second batch normalization to the output of the fourth 3D convolution layer;
applying a second ReLU activation to the output of the second batch normalization; and
applying a fifth 3D convolution layer to the output of the second ReLU activation.

13. The computer program product of claim 11 wherein:
the encoder E(·) extracts frame representations for each of the frames Iₜ, individually, as E(·): Iₜ → xₜ, where xₜ is a spatial feature representation of the frame It at time t, wherein:
Iₜ ∈ {0, 255}^{W,H,C} is an RGB frame at time t with width W, height H, and C;
Sₜ ∈ {0,C}^{W,H} is a pixelwise segmentation annotation, corresponding with It, at time t with C semantic classes, and
the temporal decoder $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ processes a temporal batch of the features ${\left|\left[{z}_{t}\right]\right.}_{t = t - \frac{T}{2}}^{t + \frac{T}{2}}$, passed from the encoder, and centered at time t within a temporal window of T frames, whereby the temporal decoder is a spatio-temporal decoder Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ which predicts the segmentation maps ${\left[{{S}^{˜}}_{t}\right]}_{t = t - \frac{T}{2}}^{t + \frac{T}{2}}$.

## Patentansprüche

1. Computerimplementiertes Verfahren, umfassend:
Nutzen, für ein Training und eine postoperative Videoverarbeitung oder eine Echtzeitführung, eines räumlich-zeitlichen Netzwerks für eine semantische Videosegmentierung in chirurgischen Videos, das einschließt:
Annehmen, durch einen Codierer, einer Sequenz von Einzelbildern, die während einer Operation erfasst werden, als eine Eingabe basierend auf einem zeitlichen Fenster T;
Extrahieren, mit dem Codierer, von Merkmalen für jedes Einzelbild in der Sequenz;
Weiterleiten, an einen Decodierer, der extrahierten Merkmale;
Erlernen, durch den Decodierer, von räumlich-zeitlichen Darstellungen der Merkmale; und
Ausgeben, durch den Decodierer, einer Segmentierungskarte für ein zentrales Einzelbild eines zeitlichen Batches von Einzelbildern, wobei der Decodierer ein zeitlicher Decodierer ist, wobei:
Ausgeben durch den zeitlichen Decodierer einschließt:
Anwenden einer ersten 3D-Faltungsschicht auf die Encoder-Ausgabe;
Anwenden einer additiven Reihe von erweiterten N-3D-Residualschichten auf die Ausgabe der ersten 3D-Faltungsschicht;
Anwenden einer zweiten 3D-Faltungsschicht auf die Ausgabe der erweiterten N-3D-Residualschichten; und
Anwenden einer Segmentierungsschicht auf die Ausgabe der zweiten 3D-Faltungsschicht.
wobei:
Anwenden jeder erweiterten 3D-Residualschicht einschließt:
Anwenden normalisierter Gewichte auf die Ausgabe einer unmittelbar vorhergehenden 3D-Faltungsschicht;
Anwenden einer ersten Batch-Normalisierung auf die Ausgabe des Anwendens normalisierter Gewichte;
Anwenden einer Aktivierung einer gleichgerichteten linearen Einheit (ReLU) auf die Ausgabe der ersten Batch-Normalisierung; und
Anwenden einer dritten 3D-Faltungsschicht auf die Ausgabe der ReLU-Aktivierung.

2. Computerimplementiertes Verfahren nach Anspruch 1, wobei das Nutzen das Nutzen für die Echtzeitführung ausschließt.

3. Computerimplementiertes Verfahren nach Anspruch 1 oder 2, wobei das räumlich-zeitliche Netzwerk ein räumlich-zeitliches Faltungsnetzwerk ist.

4. Computerimplementiertes Verfahren nach Anspruch 3, wobei der Codierer ein statischer Codierer ist.

5. Computerimplementiertes Verfahren nach Anspruch 1, wobei
die Segmentierungsschicht einschließt:
Anwenden einer vierten 3D-Faltungsschicht auf die Ausgabe der unmittelbar vorhergehenden 3D-Faltungsschicht;
Anwenden einer zweiten Batch-Normalisierung auf die Ausgabe der vierten 3D-Faltungsschicht;
Anwenden einer zweiten ReLU-Aktivierung auf die Ausgabe der zweiten Batch-Normalisierung; und
Anwenden einer fünften 3D-Faltungsschicht auf die Ausgabe der zweiten ReLU-Aktivierung.

6. Computerimplementiertes Verfahren nach einem der vorstehenden Ansprüche, wobei:
der Codierer E(·) Einzelbilddarstellungen für jedes der Einzelbilder It individuell als E(·) extrahiert: Iₜ → xₜ, wobei xₜ eine räumliche Merkmalsdarstellung des Einzelbildes It zu einem Zeitpunkt t ist, wobei:
Iₜ ∈ {0, 255}^{W,H,C} ein RGB-Einzelbild zu dem Zeitpunkt t mit einer Breite W, einer Höhe H und C ist;
St ∈ {0,C}^{W,H} eine pixelweise Segmentierungsannotation, die It entspricht, zu dem Zeitpunkt t mit C semantischen Klassen ist und
der zeitliche Decodierer $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ einen zeitlichen Batch der Merkmale ${\left|\left[{z}_{t}\right]\right.}_{t = t - \frac{T}{2}}^{t + \frac{T}{2}}$ verarbeitet, die von dem Codierer weitergeleitet werden und zu dem Zeitpunkt t innerhalb eines zeitlichen Fensters von T Einzelbildern zentriert sind, wodurch der zeitliche Decodierer ein räumlichzeitlicher Decodierer Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ ist, der die Segmentierungskarten ${\left[{{S}^{˜}}_{t}\right]}_{t = t - \frac{T}{2}}^{t + \frac{T}{2}}$ vorhersagt.

7. System, umfassend:
ein Datenlager, umfassend Videodaten, die mit einem chirurgischen Eingriff verknüpft sind; und
ein Trainingssystem für maschinelles Lernen, das konfiguriert ist zum:
Nutzen, für das Training und die postoperative Videoverarbeitung oder die Echtzeitführung, eines räumlich-zeitlichen Netzwerks für die semantische Videosegmentierung in chirurgischen Videos, wobei das System konfiguriert ist zum:
Extrahieren, mit einem Codierer, von Merkmalen jedes Einzelbildes in einer Sequenz von Einzelbildern, die während der Operation erfasst werden, basierend auf einem zeitlichen Fenster T;
Erlernen, durch einen Decodierer, von räumlich-zeitlichen Darstellungen der Merkmale; und
Ausgeben, durch den Decoder, einer Segmentierungskarte für ein zentrales Einzelbild eines zeitlichen Batches von Einzelbildern, wobei:
der zeitliche Decodierer Mittel einschließt zum:
Anwenden einer ersten 3D-Faltungsschicht auf die Encoder-Ausgabe;
Anwenden einer additiven Reihe von erweiterten N-3D-Residualschichten auf die Ausgabe der ersten 3D-Faltungsschicht;
Anwenden einer zweiten 3D-Faltungsschicht auf die Ausgabe der erweiterten N-3D-Residualschichten; und
Anwenden einer Segmentierungsschicht auf die Ausgabe der zweiten 3D-Faltungsschicht; und
jede erweiterte 3D-Residualschicht Mittel einschließt zum:
Anwenden normalisierter Gewichte auf die Ausgabe einer unmittelbar vorhergehenden 3D-Faltungsschicht;
Anwenden der ersten Batch-Normalisierung auf die Ausgabe des Anwendens normalisierter Gewichte
Anwenden einer Aktivierung der gleichgerichteten linearen Einheit (ReLU) auf die Ausgabe der ersten Batch-Normalisierung; und
Anwenden einer dritten 3D-Faltungsschicht auf die Ausgabe der ReLU-Aktivierung.

8. System nach Anspruch 7, wobei
der Codierer, der die extrahierten Merkmale an den Decodierer weiterleitet, ein statischer Codierer ist und der Decodierer ein zeitlicher Decodierer ist.

9. System nach Anspruch 7, wobei:
der Codierer E(·) Einzelbilddarstellungen für jedes der Einzelbilder It individuell als E(·) extrahiert:
It → xₜ, wobei xₜ eine räumliche Merkmalsdarstellung des Einzelbildes It zu dem Zeitpunkt t ist,
wobei:
Iₜ ∈ {0, 255}^{W,H,C} ein RGB-Einzelbild zu dem Zeitpunkt t mit der Breite W, der Höhe H und C ist;
Sₜ ∈ {0,C}^{W,H} eine pixelweise Segmentierungsannotation, die It entspricht, zu dem Zeitpunkt t mit C semantischen Klassen ist und
der zeitliche Decodierer $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ einen zeitlichen Batch der Merkmale ${\left|\left[{z}_{t}\right]\right.}_{t = t - \frac{T}{2}}^{t + \frac{T}{2}}$ verarbeitet, die von dem Codierer weitergeleitet werden und zu dem Zeitpunkt t innerhalb eines zeitlichen Fensters von T Einzelbildern zentriert sind, wodurch der zeitliche Decodierer ein räumlichzeitlicher Decodierer Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ ist, der die Segmentierungskarten ${\left[{{S}^{˜}}_{t}\right]}_{t = t - \frac{T}{2}}^{t + \frac{T}{2}}$ vorhersagt.

10. System nach Anspruch 7, wobei:
die Segmentierungsschicht einschließt:
Anwenden einer vierten 3D-Faltungsschicht auf die Ausgabe der unmittelbar vorhergehenden 3D-Faltungsschicht;
Anwenden der zweiten Batch-Normalisierung auf die Ausgabe der vierten 3D-Faltungsschicht;
Anwenden einer zweiten ReLU-Aktivierung auf die Ausgabe der zweiten Batch-Normalisierung; und Anwenden einer fünften 3D-Faltungsschicht auf die Ausgabe der zweiten ReLU-Aktivierung.

11. Computerprogrammprodukt, umfassend eine Speichervorrichtung, die computerausführbare Anweisungen darauf gespeichert aufweist, die, wenn sie durch einen oder mehrere Prozessoren ausgeführt werden, den einen oder die mehreren Prozessoren veranlassen, eine Vielzahl von Vorgängen durchzuführen, umfassend:
Nutzen, für das Training und die postoperative Videoverarbeitung oder die Echtzeitführung, eines räumlich-zeitlichen Netzwerks für die semantische Videosegmentierung in chirurgischen Videos, das einschließt:
Erlernen, durch einen Decoder, von räumlich-zeitlichen Darstellungen von Merkmalen, die aus jedem Einzelbild in einer Sequenz von Einzelbildern extrahiert werden, die während der Operation erfasst werden, basierend auf einem zeitlichen Fenster T; und
Ausgeben, durch den Decodierer, einer Segmentierungskarte für ein zentrales Einzelbild eines zeitlichen Batches von Einzelbildern, wobei ein Codierer die Merkmale aus jedem der Einzelbilder in der Sequenz von Einzelbildern, die während der Operation erfasst werden, basierend auf dem zeitlichen Fenster T extrahiert und die extrahierten Merkmale an den Decodierer weiterleitet, wobei der Codierer ein statischer Codierer ist, wobei der Decodierer ein zeitlicher Decodierer ist,
wobei das Ausgeben durch den zeitlichen Decodierer einschließt:
Anwenden einer ersten 3D-Faltungsschicht auf die Encoder-Ausgabe;
Anwenden einer additiven Reihe von erweiterten N-3D-Residualschichten auf die Ausgabe der ersten 3D-Faltungsschicht;
Anwenden einer zweiten 3D-Faltungsschicht auf die Ausgabe der erweiterten N-3D-Residualschichten; und
Anwenden einer Segmentierungsschicht auf die Ausgabe der zweiten 3D-Faltungsschicht, wobei:
Anwenden jeder erweiterten 3D-Residualschicht einschließt:
Anwenden normalisierter Gewichte auf die Ausgabe einer unmittelbar vorhergehenden 3D-Faltungsschicht;
Anwenden der ersten Batch-Normalisierung auf die Ausgabe des Anwendens normalisierter Gewichte;
Anwenden einer Aktivierung der gleichgerichteten linearen Einheit (ReLU) auf die Ausgabe der ersten Batch-Normalisierung; und
Anwenden einer dritten 3D-Faltungsschicht auf die Ausgabe der ReLU-Aktivierung.

12. Computerprogrammprodukt nach Anspruch 11, wobei
die Segmentierungsschicht einschließt:
Anwenden einer vierten 3D-Faltungsschicht auf die Ausgabe der unmittelbar vorhergehenden 3D-Faltungsschicht;
Anwenden der zweiten Batch-Normalisierung auf die Ausgabe der vierten 3D-Faltungsschicht;
Anwenden einer zweiten ReLU-Aktivierung auf die Ausgabe der zweiten Batch-Normalisierung; und Anwenden einer fünften 3D-Faltungsschicht auf die Ausgabe der zweiten ReLU-Aktivierung.

13. Computerprogrammprodukt nach Anspruch 11, wobei:
der Codierer E(·) Einzelbilddarstellungen für jedes der Einzelbilder It individuell als E(·) extrahiert:
Iₜ → xₜ, wobei xₜ eine räumliche Merkmalsdarstellung des Einzelbildes It zu dem Zeitpunkt t ist, wobei:
Iₜ ∈ {0, 255}^{W,H,C} ein RGB-Einzelbild zu dem Zeitpunkt t mit der Breite W, der Höhe H und C ist;
Sₜ ∈ {0,C}^{W,H} eine pixelweise Segmentierungsannotation, die It entspricht, zu dem Zeitpunkt t mit C semantischen Klassen ist und
der zeitliche Decodierer $D \left(⋅\right) : {\left[{z}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ einen zeitlichen Batch der Merkmale ${\left|\left[{z}_{t}\right]\right.}_{t = t - \frac{T}{2}}^{t + \frac{T}{2}}$ verarbeitet, die von dem Codierer weitergeleitet werden und zu dem Zeitpunkt t innerhalb eines zeitlichen Fensters von T Einzelbildern zentriert sind, wodurch der zeitliche Decodierer ein räumlichzeitlicher Decodierer Λ(·): ${\left[{I}_{t}\right]}_{t = t - \frac{T}{2}}^{t + \frac{T}{2}} \to {\left[{{S}^{˜}}_{t}\right]}_{t = t - \frac{T}{2}}^{t + \frac{T}{2}}$ ist, der die Segmentierungskarten ${\left[{{S}^{˜}}_{t}\right]}_{t = t - \frac{T}{2}}^{t + \frac{T}{2}}$ vorhersagt.

## Revendications

1. Procédé mis en œuvre par ordinateur comprenant :
l'utilisation, pour l'entraînement et le traitement vidéo post-opératoire, ou le guidage en temps réel, d'un réseau spatio-temporel pour la segmentation sémantique vidéo de vidéos chirurgicales, qui comporte :
l'acceptation, par un encodeur, d'une séquence de trames capturées pendant une intervention chirurgicale en guise d'entrée en fonction d'une fenêtre temporelle T ;
l'extraction, avec l'encodeur, de caractéristiques pour chaque trame de la séquence ;
le transfert, à un décodeur, des caractéristiques extraites ;
l'apprentissage, par le décodeur, de représentations spatio-temporelles des caractéristiques ; et
la délivrance en sortie, par le décodeur, d'une carte de segmentation pour une trame centrale d'un lot temporel de trames, dans lequel le décodeur est un décodeur temporel, dans lequel :
la délivrance en sortie par le décodeur temporel comporte :
l'application d'une première couche de convolution 3D à la sortie d'encodeur ;
l'application d'une série additionnelle de N couches résiduelles dilatées 3D à la sortie de première couche de convolution 3D ;
l'application d'une deuxième couche de convolution 3D à la sortie des N couches résiduelles dilatées 3D ; et
l'application d'une couche de segmentation à la sortie de la deuxième couche de convolution 3D.
dans lequel :
l'application de chaque couche résiduelle dilatée 3D comporte :
l'application de poids normalisés à la sortie d'une couche de convolution 3D immédiatement précédente ;
l'application d'une première normalisation de lot à la sortie de l'application de poids normalisés ;
l'application d'une activation d'unité linéaire rectifiée (ReLU) à la sortie de la première normalisation de lot ; et
l'application d'une troisième couche de convolution 3D à la sortie de l'activation ReLU.

2. Procédé mis en œuvre par ordinateur selon la revendication 1, dans lequel l'utilisation exclut l'utilisation pour un guidage en temps réel.

3. Procédé mis en œuvre par ordinateur selon la revendication 1 ou 2, dans lequel le réseau spatio-temporel est un réseau de convolution spatio-temporel.

4. Procédé mis en œuvre par ordinateur selon la revendication 3, dans lequel l'encodeur est un encodeur statique.

5. Procédé mis en œuvre par ordinateur selon la revendication 1, dans lequel
la couche de segmentation comporte :
l'application d'une quatrième couche de convolution 3D à la sortie de la couche de convolution 3D immédiatement précédente ;
l'application d'une seconde normalisation de lot à la sortie de la quatrième couche de convolution 3D ;
l'application d'une seconde activation ReLU à la sortie de la seconde normalisation de lot ; et
l'application d'une cinquième couche de convolution 3D à la sortie de la seconde activation ReLU.

6. Procédé mis en œuvre par ordinateur selon l'une quelconque revendication précédente, dans lequel :
l'encodeur E(·) extrait des représentations de trame pour chacune des trames Iₜ, individuellement, en guise de E(·) : Iₜ→xₜ, où xₜ est une représentation de caractéristique spatiale de la trame Iₜ à un instant t, dans lequel :
Iₜ ∈ {0, 255}^{W,H,C} est une trame RVB à un instant t de largeur W, de hauteur H, et C ;
Sₜ ∈ {0,C}^{W,H} est une annotation de segmentation par pixel, correspondant à Iₜ, à un instant t avec des classes sémantiques C, et
le décodeur temporel $D \left(⋅\right) : {\left[{z}_{t}\right]}_{t = t - τ / 2}^{t + τ / 2} \to {\left[{{S}^{˜}}_{t}\right]}_{t = t - τ / 2}^{t + τ / 2}$ traite un lot temporel des caractéristiques ${\left[{z}_{t}\right]}_{t = t - τ / 2}^{t + τ / 2}$, transféré par l'encodeur, et centré à un instant t dans une fenêtre temporelle de trames T, moyennant quoi le décodeur temporel est un décodeur spatio-temporel $Λ \left(⋅\right) : {\left[{I}_{t}\right]}_{t = t - τ / 2}^{t + τ / 2} \to {\left[{{S}^{˜}}_{t}\right]}_{t = t - τ / 2}^{t + τ / 2}$ qui prédit les cartes de segmentation ${\left[{{S}^{˜}}_{t}\right]}_{t = t - τ / 2}^{t + τ / 2}$.

7. Système comprenant :
une mémoire de données comprenant des données vidéo associées à une procédure chirurgicale ; et
un système d'entraînement d'apprentissage automatique configuré pour :
utiliser, pour l'entraînement et le traitement vidéo post-opératoire, ou guider en temps réel, un réseau spatio-temporel pour la segmentation sémantique vidéo de vidéos chirurgicales, dans lequel le système est configuré pour :
extraire, avec un encodeur, des caractéristiques de chaque trame dans une séquence de trames capturées pendant une intervention chirurgicale en fonction d'une fenêtre temporelle T ;
apprendre, par un décodeur, des représentations spatio-temporelles des caractéristiques ; et
délivrer en sortie, par le décodeur, une carte de segmentation pour une trame centrale d'un lot temporel de trames, dans lequel :
le décodeur temporel comporte des moyens pour :
l'application d'une première couche de convolution 3D à la sortie d'encodeur ;
l'application d'une série additionnelle de N couches résiduelles dilatées 3D à la sortie de première couche de convolution 3D ;
l'application d'une deuxième couche de convolution 3D à la sortie des N couches résiduelles dilatées 3D ; et
l'application d'une couche de segmentation à la sortie de la deuxième couche de convolution 3D ; et
chaque couche résiduelle dilatée 3D comporte des moyens pour :
l'application de poids normalisés à la sortie d'une couche de convolution 3D immédiatement précédente ;
l'application d'une première normalisation de lot à la sortie de l'application de poids normalisés
l'application d'une activation d'unité linéaire rectifiée (ReLU) à la sortie de la première normalisation de lot ; et
l'application d'une troisième couche de convolution 3D à la sortie de l'activation ReLU.

8. Système selon la revendication 7, dans lequel
l'encodeur, qui transfère les caractéristiques extraites au décodeur est un encodeur statique, et le décodeur est un décodeur temporel.

9. Système selon la revendication 7, dans lequel :
l'encodeur E(·) extrait des représentations de trame pour chacune des trames Iₜ, individuellement, en guise de
E(·) : Iₜ→xₜ, où xt est une représentation de caractéristique spatiale de la trame Iₜ à un instant t,
dans lequel :
Iₜ ∈ {0, 255}^{W,H,C} est une trame RVB à un instant t de largeur W, de hauteur H, et C ;
Sₜ ∈ {0,C}^{W,H} est une annotation de segmentation par pixel, correspondant à Iₜ, à un instant t avec des classes sémantiques C, et
le décodeur temporel $D \left(⋅\right) : {\left[{z}_{t}\right]}_{t = t - τ / 2}^{t + τ / 2} \to {\left[{{S}^{˜}}_{t}\right]}_{t = t - τ / 2}^{t + τ / 2}$ traite un lot temporel des caractéristiques ${\left[{z}_{t}\right]}_{t = t - τ / 2}^{t + τ / 2}$*,* transféré par l'encodeur, et centré à un instant t dans une fenêtre temporelle de trames T, moyennant quoi le décodeur temporel est un décodeur spatio-temporel $Λ \left(⋅\right) : {\left[{I}_{t}\right]}_{t = t - τ / 2}^{t + τ / 2} \to {\left[{{S}^{˜}}_{t}\right]}_{t = t - τ / 2}^{t + τ / 2}$ qui prédit les cartes de segmentation ${\left[{{S}^{˜}}_{t}\right]}_{t = t - τ / 2}^{t + τ / 2}$.

10. Système selon la revendication 7, dans lequel :
la couche de segmentation comporte :
l'application d'une quatrième couche de convolution 3D à la sortie de la couche de convolution 3D immédiatement précédente ;
l'application d'une seconde normalisation de lot à la sortie de la quatrième couche de convolution 3D ;
l'application d'une seconde activation ReLU à la sortie de la seconde normalisation de lot ; et l'application d'une cinquième couche de convolution 3D à la sortie de la seconde activation ReLU.

11. Produit-programme d'ordinateur comprenant un dispositif de mémoire sur lequel sont stockées des instructions exécutables par ordinateur qui, lorsqu'elles sont exécutées par un ou plusieurs processeurs, amènent le ou les processeurs à exécuter une pluralité d'opérations comprenant :
l'utilisation, pour l'entraînement et le traitement vidéo post-opératoire, ou le guidage en temps réel, d'un réseau spatio-temporel pour la segmentation sémantique vidéo de vidéos chirurgicales, qui comporte :
l'apprentissage, par un décodeur, de représentations spatio-temporelles de caractéristiques extraites de chaque trame d'une séquence de trames capturées pendant une intervention chirurgicale en fonction d'une fenêtre temporelle T ; et
la délivrance en sortie, par le décodeur, d'une carte de segmentation pour une trame centrale d'un lot temporel de trames, dans lequel un encodeur extrait les caractéristiques de chacune des trames de la séquence de trames capturées pendant une intervention chirurgicale en fonction de la fenêtre temporelle T et transfère les caractéristiques extraites au décodeur, dans lequel l'encodeur est un encodeur statique, dans lequel le décodeur est un décodeur temporel,
la délivrance en sortie par le décodeur temporel comporte :
l'application d'une première couche de convolution 3D à la sortie d'encodeur ;
l'application d'une série additionnelle de N couches résiduelles dilatées 3D à la sortie de première couche de convolution 3D ;
l'application d'une deuxième couche de convolution 3D à la sortie des N couches résiduelles dilatées 3D ; et
l'application d'une couche de segmentation à la sortie de la deuxième couche de convolution 3D, dans lequel :
l'application de chaque couche résiduelle dilatée 3D comporte :
l'application de poids normalisés à la sortie d'une couche de convolution 3D immédiatement précédente ;
l'application d'une première normalisation de lot à la sortie de l'application de poids normalisés ;
l'application d'une activation d'unité linéaire rectifiée (ReLU) à la sortie de la première normalisation de lot ; et
l'application d'une troisième couche de convolution 3D à la sortie de l'activation ReLU.

12. Produit-programme d'ordinateur selon la revendication 11, dans lequel
la couche de segmentation comporte :
l'application d'une quatrième couche de convolution 3D à la sortie de la couche de convolution 3D immédiatement précédente ;
l'application d'une seconde normalisation de lot à la sortie de la quatrième couche de convolution 3D ;
l'application d'une seconde activation ReLU à la sortie de la seconde normalisation de lot ; et l'application d'une cinquième couche de convolution 3D à la sortie de la seconde activation ReLU.

13. Produit-programme d'ordinateur selon la revendication 11 dans lequel :
l'encodeur E(·) extrait des représentations de trame pour chacune des trames Iₜ, individuellement, en guise de
E(·) : Iₜ→xₜ, où xₜ est une représentation de caractéristique spatiale de la trame Iₜ à un instant t, dans lequel :
Iₜ ∈ {0, 255}^{W,H,C} est une trame RVB à un instant t de largeur W, de hauteur H, et C ;
Sₜ ∈ {0,C}^{W,H} est une annotation de segmentation par pixel, correspondant à It, à un instant t avec des classes sémantiques C, et
le décodeur temporel $D \left(⋅\right) : {\left[{z}_{t}\right]}_{t = t - τ / 2}^{t + τ / 2} \to {\left[{{S}^{˜}}_{t}\right]}_{t = t - τ / 2}^{t + τ / 2}$ traite un lot temporel des caractéristiques ${\left[{z}_{t}\right]}_{t = t - τ / 2}^{t + τ / 2}$*,* transféré par l'encodeur, et centré à un instant t dans une fenêtre temporelle de trames T, moyennant quoi le décodeur temporel est un décodeur spatio-temporel $Λ \left(⋅\right) : {\left[{I}_{t}\right]}_{t = t - τ / 2}^{t + τ / 2} \to {\left[{{S}^{˜}}_{t}\right]}_{t = t - τ / 2}^{t + τ / 2}$ qui prédit les cartes de segmentation ${\left[{{S}^{˜}}_{t}\right]}_{t = t - τ / 2}^{t + τ / 2}$.
